# EUROPEAN PATENT APPLICATION

(11) **EP 4 654 490 A1**
(43) Date of publication of application: **26.11.2025**
(21) Application number: 23925041.8
(22) Date of filing: 30.11.2023
(51) Int. Cl.: H04B 7/185, H04W 4/02, H04W 36/32

(54) **METHOD FOR RESTRICTING USE OF SATELLITE COMMUNICATION, AND ELECTRONIC DEVICE**

(30) Priority: 27.02.2023 CN 202310227046
(71) Applicant: Huawei Technologies Co., Ltd., Shenzhen, Guangdong 518129 (CN)
(72) Inventor: WANG, Bao, Shenzhen, Guangdong 518129 (CN); QIAN, Feng, Shenzhen, Guangdong 518129 (CN); LI, Zhenzhou, Shenzhen, Guangdong 518129 (CN); YAO, Zhendong, Shenzhen, Guangdong 518129 (CN)
(74) Representative: Körber, Martin Hans
(86) International application number: PCT/CN2023/135625
(87) International publication number: WO 2024/179094

(57) **Abstract**

This application provides a method for restricting use of satellite communication and an electronic device, to restrict use of a satellite communication function of an electronic device, so that the electronic device uses satellite communication more securely. The solution is applied to the electronic device that supports communication with a satellite. The method includes: displaying a communication interface of a first application, where the communication interface includes a first function control, and the first function control is used to trigger the electronic device to communicate with the satellite by using the first application; detecting an operation on the first function control; in response to the operation on the first function control, determining, based on location information of the electronic device and/or a moving speed of the electronic device, whether the electronic device meets a use restriction condition; and when the electronic device meets the use restriction condition, restricting the electronic device from communicating with the satellite by using the first application. In this solution, when the location information of the electronic device and/or the moving speed of the electronic device do/does not meet a requirement for satellite communication, the electronic device may be restricted from communicating with the satellite.

## Description

This application claims priority to Chinese Patent Application No. 202310227046.6, filed with the China National Intellectual Property Administration on February 27, 2023 and entitled "METHOD FOR RESTRICTING USE OF SATELLITE COMMUNICATION AND ELECTRONIC DEVICE", which is incorporated herein by reference in its entirety.

### TECHNICAL FIELD

This application relates to the field of satellite communication technologies, and in particular, to a method for restricting use of satellite communication and an electronic device.

### BACKGROUND

Satellite communication mainly means radio communication between earth stations or between an earth station and a spacecraft to forward signals via a communication satellite. Because a satellite is far away from the ground, a communication range of satellite communication is not affected by a geographical environment of a surface of the earth. Therefore, satellite communication is usually applicable to areas in which mobile communication is not covered or cannot be covered, or a communication system is damaged, for example, oceans, deserts, grasslands, or uninhabited areas. Currently, a part of electronic devices (for example, mobile phones) have a satellite communication function, so that satellite communication resources can be used to provide communication services for the electronic devices.

Although using satellite communication is convenient, in an actual process, there may be some scenarios in which a signal of an electronic device affects another device if the electronic device uses satellite communication. Therefore, it is necessary to restrict use of a satellite communication function of the electronic device, so that the electronic device uses satellite communication more securely.

### SUMMARY

Embodiments of this application provide a method for restricting use of satellite communication and an electronic device, to restrict use of a satellite communication function of an electronic device, so that the electronic device uses satellite communication more securely.

To achieve the foregoing objective, embodiments of this application provide the following technical solutions.

According to a first aspect, an embodiment of this application provides a method for restricting use of satellite communication, applied to an electronic device. The electronic device has a first application that supports communication between the electronic device and a satellite. The method includes: The electronic device displays a communication interface of the first application, where the communication interface includes at least a first function control, and the first function control is used to trigger the electronic device to communicate with the satellite by using the first application; and detects an operation on the first function control. In response to the operation on the first function control, the electronic device determines, based on location information of the electronic device and/or a moving speed of the electronic device, whether the electronic device meets a use restriction condition. When the electronic device meets the use restriction condition, the electronic device restricts the electronic device from communicating with the satellite by using the first application.

In the method provided in this embodiment of this application, if the electronic device detects that the first function control in the communication interface of the first application that supports communication with the satellite is triggered, it indicates that a user is currently communicating with the satellite by using the first application. In this case, the electronic device obtains the current location information and/or the current moving speed of the electronic device, and determines whether the electronic device can use satellite communication. If the electronic device meets the use restriction condition, it indicates that the electronic device cannot currently use satellite communication. As a result, the electronic device may restrict the electronic device from communicating with the satellite by using the first application. In this way, in a scenario in which use is restricted due to the moving speed, interference caused by a signal when the electronic device uses satellite communication to another device is avoided, so that use of satellite communication is more secure; and in a scenario in which use is restricted due to the location information, satellite communication is more valid.

In a possible implementation of this application, that the electronic device restricts the electronic device from communicating with the satellite by using the first application includes: The electronic device does not send, to the satellite, communication content triggered by the user in the communication interface.

In a possible implementation of this application, that the electronic device restricts the electronic device from communicating with the satellite by using the first application further includes: The electronic device outputs first prompt information, where the first prompt information indicates a reason why the electronic device is restricted from communicating with the satellite by using the first application.

In a scenario in which the electronic device is restricted from communicating with the satellite by using the first application, the electronic device outputs the first prompt information, so that the user determines, based on the first prompt information, the reason why the electronic device is restricted from communicating with the satellite by using the first application, to no longer frequently operate the first application.

In a possible implementation of this application, that the electronic device outputs the first prompt information may be specifically: The electronic device displays a first prompt card including the first prompt information. For example, when the user taps the first function control, if the electronic device determines that the electronic device meets the use restriction condition, the first prompt card pops up in the communication interface, to display a prompt to the user.

In a possible implementation of this application, that the electronic device determines, based on the moving speed of the electronic device, whether the electronic device meets the use restriction condition includes: The electronic device determines that the electronic device meets the use restriction condition when the moving speed of the electronic device is greater than or equal to a preset speed threshold; or the electronic device determines that the electronic device does not meet the use restriction condition when the moving speed of the electronic device is less than the preset speed threshold.

In the foregoing solution, whether the electronic device meets the use restriction condition is determined based on the moving speed of the electronic device. In this way, in a scenario in which the moving speed of the electronic device is greater than the preset speed threshold, the electronic device is automatically restricted from communicating with the satellite by using the first application.

In a possible implementation of this application, the method provided in this embodiment of this application further includes: The electronic device determines a scenario in which the electronic device is located; and
that the electronic device determines that the electronic device meets the use restriction condition when the moving speed of the electronic device is greater than or equal to the preset speed threshold includes: determining that the electronic device meets the use restriction condition when the moving speed of the electronic device is greater than or equal to the preset speed threshold, and the scenario in which the electronic device is located is a preset scenario.

The moving speed of the electronic device and the scenario in which the electronic device is located are comprehensively determined, so that the electronic device can be automatically restricted from communicating with the satellite by using the first application in the preset scenario. In comparison with the case in which the electronic device is restricted, separately based on the moving speed of the electronic device, from communicating with the satellite by using the first application, the electronic device may be more accurately restricted from communicating with the satellite in the preset scenario, to avoid restricting the electronic device from communicating with the satellite by using the first application in a non-preset scenario when the speed meets a requirement.

In a possible implementation of this application, that the electronic device determines the scenario in which the electronic device is located includes: The electronic device obtains an altitude of the electronic device; and when the altitude of the electronic device is higher than or equal to a preset altitude, the electronic device determines that the scenario in which the electronic device is located is the preset scenario.

In a possible implementation of this application, the electronic device has a first list, the first list is used to determine information about one or more communication management and control areas in which use of satellite communication is restricted, and that the electronic device determines, based on the location information of the electronic device, whether the electronic device meets the use restriction condition includes: When the location information of the electronic device indicates that a location of the electronic device is within any one of the communication management and control areas, the electronic device determines that the electronic device meets the use restriction condition; or when the location information of the electronic device indicates that the location of the electronic device is outside the one or more communication management and control areas, the electronic device determines that the electronic device does not meet the use restriction condition.

Determining, with reference to the location information, whether the electronic device meets the use restriction condition may restrict the electronic device from communicating with the satellite by using the first application when the electronic device is located in the communication management and control area.

In a possible implementation of this application, the first list includes information about one or more public communication areas in which satellite communication can be used and information about n communication management and control areas included in the public communication area, and n is an integer greater than or equal to 0; or
the first list includes the information about the one or more communication management and control areas in which satellite communication cannot be used.

It may be understood that when one public communication area includes information about 0 communication management and control areas, it indicates that there is no communication management and control area in the public communication area.

In a possible implementation of this application, the first list is a list preconfigured in the electronic device, or the first list is a list obtained by the electronic device from a server.

In a possible implementation of this application, the method provided in this embodiment of this application may further include: The electronic device periodically obtains the first list from the server.

In a possible implementation of this application, when the electronic device restricts the electronic device from communicating with the satellite by using the first application, the method provided in this embodiment of this application further includes: if detecting the operation on the first function control again, in response to the operation on the first function control again, re-obtaining the location information of the electronic device and/or the moving speed of the electronic device; determining, based on the re-obtained location information of the electronic device and/or the re-obtained moving speed of the electronic device, whether the electronic device meets the use restriction condition; when determining, based on the re-obtained location information of the electronic device and/or the re-obtained moving speed of the electronic device, that the electronic device does not meet the use restriction condition, sending, via the satellite, the communication content triggered by the user in the call interface; and when the electronic device meets the use restriction condition again, continuing to restrict the electronic device from communicating with the satellite by using the first application. For example, the communication content triggered by the user in the call interface may be an SMS message input by the user in the call interface, or a voice call request or a video call request triggered by the user in the call interface.

In a possible implementation of this application, if the electronic device determines that the location information of the electronic device is within the communication management and control area, and the moving speed of the electronic device is greater than or equal to the preset moving speed threshold, the electronic device determines that the use restriction condition is met.

In a possible implementation of this application, the communication interface is a messaging session interface, and the first function control is a sending control; or the communication interface is a voice call interface, and the first function control is a voice call control or a video call control.

In a possible implementation of this application, before the electronic device displays the communication interface of the first application, the method provided in this embodiment of this application further includes: The electronic device monitors the location information of the electronic device and/or the moving speed of the electronic device.

In a possible implementation of this application, that the electronic device monitors the location information of the electronic device and/or the moving speed of the electronic device includes: When detecting an operation that the user indicates to open the first application, the electronic device starts to monitor the location information of the electronic device and/or the moving speed of the electronic device.

In a possible implementation of this application, after the electronic device detects the operation on the first function control, the method provided in this embodiment of this application further includes: in response to the operation on the first function control, obtaining a current sending time interval, where the current sending time interval is a difference between a current time and a moment at which the electronic device previously uses satellite communication; and when the current sending time interval is less than or equal to a preset sending time interval, setting an operation state of the first function control in the communication interface to a use-restricted state; or when the current sending time interval is greater than or equal to the preset sending time interval, in response to the operation on the first function control, the electronic device communicates with the satellite by using the first application.

In a possible implementation of this application, that the electronic device sets the operation state of the first function control in the communication interface to the use-restricted state further includes: displaying use-restricted countdown information in the communication interface, where the use-restricted countdown information is a time at which the operation state of the first function control changes from the use-restricted state to an available state; and after the time included in the use-restricted countdown information, the method further includes: the electronic device sets the operation state of the first function control in the communication interface to the available state.

According to a second aspect, an embodiment of this application provides a communication apparatus. The communication apparatus may implement the method according to any possible implementation of the first aspect, and therefore may also implement beneficial effect according to any possible implementation of the first aspect. The communication apparatus may be an electronic device, or may be an apparatus that supports the electronic device to implement the method according to any possible implementation of the first aspect, for example, a chip used in the electronic device. The communication apparatus may implement the foregoing method by software, hardware, or hardware executing corresponding software.

In an example, the communication apparatus includes: a display unit, configured to display a communication interface of a first application, where the communication interface includes a first function control, and the first function control is used to trigger the electronic device to communicate with a satellite by using the first application; a detection unit, configured to: detect an operation on the first function control; a determining unit, configured to: in response to the operation on the first function control, determine, based on location information of the electronic device and/or a moving speed of the electronic device, whether the electronic device meets a use restriction condition; and a processing unit, configured to: when the determining unit determines that the electronic device meets the use restriction condition, restrict the electronic device from communicating with the satellite by using the first application.

In a possible implementation of this application, the processing unit is further configured to control the display unit to output first prompt information, where the first prompt information indicates a reason why the electronic device is restricted from communicating with the satellite by using the first application.

In a possible implementation of this application, the determining unit is configured to determine that the electronic device meets the use restriction condition when the moving speed of the electronic device is greater than or equal to a preset speed threshold; or the determining unit is configured to determine that the electronic device does not meet the use restriction condition when the moving speed of the electronic device is less than the preset speed threshold.

In a possible implementation of this application, the processing unit is further configured to determine a scenario in which the electronic device is located; and the determining unit is further configured to determine that the electronic device meets the use restriction condition when the moving speed of the electronic device is greater than or equal to the preset speed threshold, and the scenario in which the electronic device is located is a preset scenario.

In a possible implementation of this application, the processing unit is further configured to: obtain an altitude of the electronic device; and when the altitude of the electronic device is higher than or equal to a preset altitude, determine that the scenario in which the electronic device is located is the preset scenario.

In a possible implementation of this application, the electronic device has a first list, and the first list is used to determine information about one or more communication management and control areas in which use of satellite communication is restricted; and the determining unit is specifically configured to: when the location information of the electronic device indicates that a location of the electronic device is within any one of the communication management and control areas, determine that the electronic device meets the use restriction condition; or when the location information of the electronic device indicates that the location of the electronic device is outside the one or more communication management and control areas, determine that the electronic device does not meet the use restriction condition.

In a possible implementation of this application, the first list includes information about one or more public communication areas in which satellite communication can be used and information about n communication management and control areas included in the public communication area, and n is an integer greater than or equal to 0; or the first list includes the information about the one or more communication management and control areas in which satellite communication cannot be used.

In a possible implementation of this application, the first list is a list preconfigured in the electronic device, or the first list is a list obtained by the electronic device from a server.

In a possible implementation of this application, the processing unit is further configured to: in response to the operation on the first function control again, control a first obtaining unit to re-obtain the location information and/or the moving speed of the electronic device; the processing unit is further configured to determine, based on the re-obtained location information and/or the re-obtained moving speed of the electronic device, whether the electronic device meets the use restriction condition; a communication unit is configured to: when the electronic device does not meet the use restriction condition, communicate with the satellite by using the first application, to send communication content triggered by a user in the call interface; and the processing unit is further configured to: when the electronic device meets the use restriction condition again, continue to restrict the electronic device from communicating with the satellite by using the first application.

In a possible implementation of this application, the communication interface is a messaging session interface, and the first function control is a sending control; or the communication interface is a voice call interface, and the first function control is a voice call control or a video call control.

In a possible implementation of this application, a monitoring unit is configured to monitor the location information of the electronic device and/or the moving speed of the electronic device.

In a possible implementation of this application, if the detection module detects an operation that the user indicates to open the first application, the monitoring unit is configured to start to monitor the location information of the electronic device and/or the moving speed of the electronic device.

In a possible implementation of this application, a second obtaining unit is further configured to: in response to the operation on the first function control, obtain a current sending time interval, where the current sending time interval is a difference between a current time and a moment at which the electronic device previously uses satellite communication; and when the current sending time interval is less than or equal to a preset sending time interval, set an operation state of the first function control in the communication interface to a use-restricted state; or when the current sending time interval is greater than or equal to the preset sending time interval, in response to the operation on the first function control, communicate, through the electronic device, with the satellite by using the first application. When the current sending time interval is greater than or equal to the preset sending time interval, in response to the operation on the first function control, the processing unit communicates with the satellite by using the first application; or when the current sending time interval is less than or equal to the preset sending time interval, the processing unit sets the operation state of the first function control in the communication interface to the use-restricted state. Specifically, the current sending time interval is determined based on a preset sending interval threshold and a first difference, and the first difference is determined based on a moment at which the electronic device obtains the current sending time interval and a moment at which the electronic device previously communicates with the satellite by using the first application.

In a possible implementation of this application, the display unit is further configured to display use-restricted countdown information of the first function control in the communication interface, where the use-restricted countdown information is a time at which the operation state of the first function control changes from the use-restricted state to an available state; and the processing unit is further configured to set the operation state of the first function control in the communication interface to the available state. In other words, the operation state of the first function control in the displayed communication interface of the display unit also changes to the available state.

According to a third aspect, an embodiment of this application provides a computer-readable storage medium. The computer-readable storage medium stores computer program instructions; and when the computer program instructions are executed by a processing circuit, the method described in the first aspect or the possible implementations of the first aspect is implemented.

According to a fourth aspect, an embodiment of this application provides a computer program product including instructions. When the instructions are run on a computer, the computer is enabled to perform the method described in the first aspect or the possible implementations of the first aspect.

According to a fifth aspect, a chip system is provided. The chip system includes a processing circuit and a storage medium. The storage medium stores computer program instructions; and when the computer program instructions are executed by the processing circuit, the method described in the first aspect or the possible implementations of the first aspect is implemented.

Optionally, in the foregoing chip system, the processing circuit may be replaced with a processor, and the storage medium may be replaced with a memory. Optionally, the chip system may further include a communication interface, and the communication interface is configured to implement communication between the chip system and an external device.

According to a sixth aspect, this application provides an electronic device. The electronic device includes a processor, a memory, a display, and a computer program. The computer program is stored in the memory; and when the computer program is executed by the processor, the electronic device is enabled to perform the method described in the first aspect or the implementations of the first aspect.

### BRIEF DESCRIPTION OF DRAWINGS

FIG. 1A and FIG. 1B each are a diagram of a communication scenario according to an embodiment of this application;
FIG. 2A to FIG. 2L are diagrams in which a sender mobile phone sends an SMS message to a receiver mobile phone via a satellite according to an embodiment of this application;
FIG. 3A to FIG. 3C are diagrams in which a sender mobile phone makes a call to a receiver mobile phone via a satellite according to an embodiment of this application;
FIG. 4 is a diagram of a structure of an electronic device according to an embodiment of this application;
FIG. 5 is a diagram of a software architecture of an electronic device according to an embodiment of this application;
FIG. 6A and FIG. 6B are a schematic flowchart 1 of a method for restricting use of satellite communication according to an embodiment of this application;
FIG. 7(a) to FIG. 7(c) are a diagram of an interface when a mobile phone is restricted from communicating with a satellite according to an embodiment of this application;
FIG. 8(a) and FIG. 8(b) are a diagram of another interface when a mobile phone is restricted from communicating with a satellite according to an embodiment of this application;
FIG. 9 is a schematic flowchart of specific implementation of a first method for restricting use of satellite communication according to an embodiment of this application;
FIG. 10A and FIG. 10B are a schematic flowchart of specific implementation of a second method for restricting use of satellite communication according to an embodiment of this application;
FIG. 11 is a schematic flowchart of specific implementation of a third method for restricting use of satellite communication according to an embodiment of this application;
FIG. 12 is a diagram of a structure of an electronic device according to an embodiment of this application; and
FIG. 13 is a diagram of a structure of a chip system according to an embodiment of this application.

### DESCRIPTION OF EMBODIMENTS

To clearly describe technical solutions in embodiments of this application, terms such as "first" and "second" are used in embodiments of this application to distinguish between same items or similar items that provide basically same functions or purposes. For example, a first operation and a second operation are merely used to distinguish between different operations, and a sequence of the first operation and the second operation is not limited. A person skilled in the art may understand that the terms such as "first" and "second" do not limit a quantity or an execution sequence, and the terms such as "first" and "second" do not indicate a definite difference.

It should be noted that in this application, the word such as "example" or "for example" represents giving an example, an illustration, or a description. Any embodiment or design scheme described as an "example" or "for example" in this application should not be explained as being more preferred or having more advantages than another embodiment or design scheme. To be precise, use of the word such as "example" or "for example" is intended to present a relative concept in a specific manner.

In this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" usually indicates an "or" relationship between the associated objects. At least one of the following items (pieces) or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

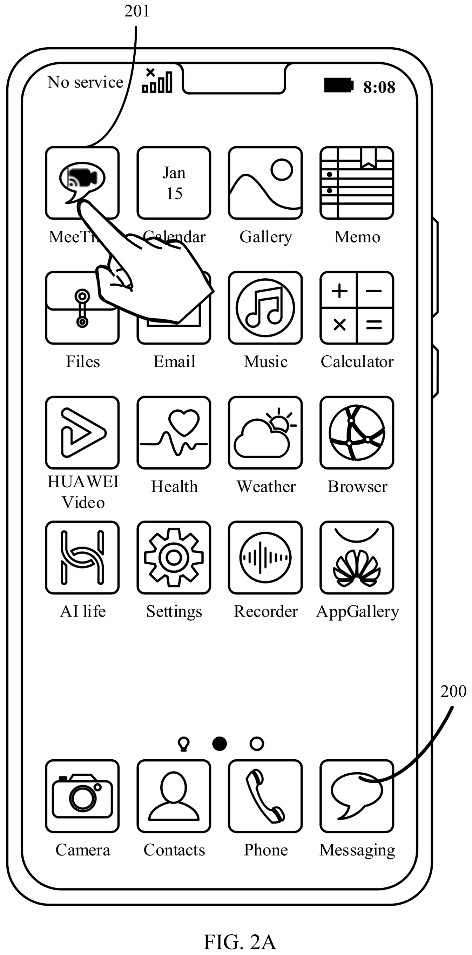

Before embodiments of this application are described, related terms in embodiments of this application are first explained as follows:
A method for restricting use of satellite communication provided in embodiments of this application may be applied to an electronic device having a satellite communication function. Usually, a first application may be installed in the electronic device having the satellite communication function. The first application may be an application that supports communication between the electronic device and a satellite, for example, an instant messaging application. The first application may be an application pre-installed before delivery of the device, for example, a Huawei MeeTime application 201 shown in FIG. 2A, or may be a third-party application downloaded by the device, for example, WeChat or a messaging application (for example, a messaging application 200 shown in FIG. 2A) installed in a mobile phone. The MeeTime application 201 is a social application that is on a mobile device such as a smartphone or a tablet computer and that supports a mobile operating system, and is instant messaging software installed in a Huawei device before delivery.

In an example, the electronic device in embodiments of this application may be a device that supports satellite communication, for example, a smartwatch, a smart band, a mobile phone, a smart home, a vehicle-mounted device, or an augmented reality (augmented reality, AR)/virtual reality (virtual reality, VR) device. The first application is installed in the electronic device, and a name and a type of the electronic device are not limited in embodiments of this application.

Satellite communication mainly means radio communication between earth stations or between an earth station and a spacecraft to forward signals via a communication satellite. Because a satellite is far away from the ground, a communication range of satellite communication is not affected by a geographical environment of a surface of the earth. Therefore, satellite communication is usually applicable to areas in which mobile communication is not covered or cannot be covered, or a communication system is damaged, for example, oceans, deserts, grasslands, or uninhabited areas. Currently, a part of electronic devices (for example, mobile phones) have a satellite communication function, so that satellite communication resources can be used to provide communication services for the electronic devices.

Although using satellite communication is convenient, in an actual process, there may be some scenarios in which a signal of an electronic device affects another device if the electronic device uses satellite communication. For example, during flight of an airplane, to avoid interference of the signal of the electronic device to a communication device on the airplane, a passenger is usually required to set a mobile phone to an airplane mode or power off the mobile phone. This is mainly to ensure safe flight of the airplane. However, although a user may set the mobile phone to the airplane mode or power off the mobile phone, the foregoing solution cannot restrict the user from using the electronic device. In another scenario, currently, a part of mobile phones that support the satellite communication function are used in specific areas, and are restricted from using satellite communication in other areas. Therefore, it is necessary to restrict use of the satellite communication function of the electronic device, so that the electronic device uses satellite communication more securely and is more compliant with a specification.

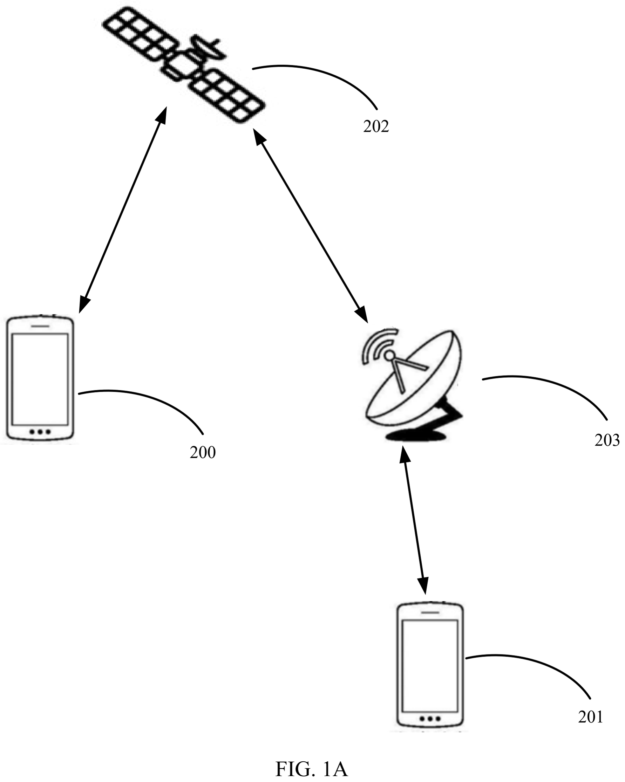

FIG. 1A is a diagram of a scenario in which an electronic device communicates with a satellite according to an embodiment of this application. As shown in FIG. 1A, a system includes an electronic device 200, an electronic device 201, one or more satellites 202, and one or more ground stations 203.

In an example, in the scenario shown in FIG. 1A, a process in which the electronic device 200 in a satellite communication network performs a voice or video call with the electronic device 201 in a cellular communication network is as follows: A user initiates a call request for the voice or video call by using a first application installed in the electronic device 200. The electronic device 200 sends, through an antenna of the electronic device 200, the call request triggered by the user to the ground station 203 in an area A. Then, the ground station 203 in the area A transmits the call request of the electronic device 200 as a call signal to the satellite 202 serving the area A. After receiving the call signal, the satellite 202 serving the area A amplifies the signal and forwards the signal to the ground station 203 in an area B in which the electronic device 201 is located. The ground station 203 in the area B sends, through a cellular gateway, the call signal to a base station corresponding to the electronic device 201. Finally, the base station sends the call signal to the electronic device 201, and the electronic device 201 may receive the call signal through the antenna. In the foregoing solution, transmission of the request for the voice or video call from the satellite communications network to the cellular network may be implemented.

After the electronic device 201 receives the call signal, the electronic device 201 may choose to reject the call request, or may accept the call request. When the electronic device 201 accepts the call request, the electronic device 201 may send the accepted request to the ground station 203 in the area B through the antenna. Then, the ground station 203 in the area B transmits the accepted request as a signal to the satellite 202, to be transmitted by the satellite 202 to the electronic device 200. The electronic device 200 and the electronic device 201 may make the voice or video call based on the satellite. When the electronic device 201 rejects the call request, the electronic device 201 may send the rejected call request to the ground station 203 in the area B through the antenna. Then, the ground station 203 in the area B transmits the rejected call request as a signal to the satellite 202, to be transmitted by the satellite 202 to the electronic device 200. After receiving the rejected call request, the electronic device 200 stops calling the electronic device 201.

In an example, in the scenario shown in FIG. 1A, a process in which the electronic device 200 in a satellite communication network performs a voice or video call with the electronic device 201 in the satellite communication network is as follows: A user initiates a call request for the voice or video call by using a first application installed in the electronic device 200. The electronic device 200 sends, through an antenna of the electronic device 200, the call request triggered by the user to the ground station 203 in an area A. Then, the ground station 203 in the area A transmits the call request of the electronic device 200 as a call signal to the satellite 202 serving the area A. After receiving the call signal, the satellite 202 amplifies the signal and sends the signal to the ground station in an area B in which the electronic device 201 is located. The ground station 203 in the area B sends the call signal to the electronic device 201, and the electronic device 201 may receive the call signal through the antenna. Transmission of the request for the voice or video call from the satellite communication network to the cellular network is implemented, so that communication between the electronic device 200 in the satellite communication network and the electronic device 201 in the cellular network is implemented.

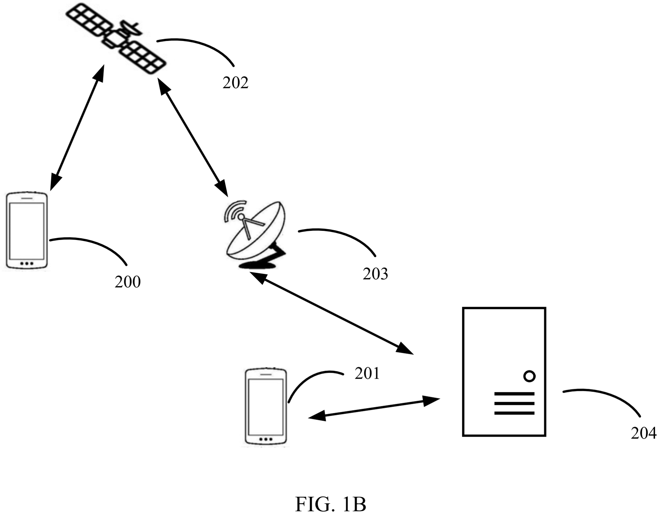

As shown in FIG. 1B, FIG. 1B is a diagram of a scenario in which an electronic device sends a short message service message (an SMS message for short) via a satellite according to an embodiment of this application. In comparison with the scenario shown in FIG. 1A, the communication scenario shown in FIG. 1B may further include a satellite messaging application platform 204.

In an example, in the scenario shown in FIG. 1B, that both the electronic device 200 and the electronic device 201 are located in the satellite communication network is used as an example. A process in which the electronic device 200 sends an SMS message to the electronic device 201 is as follows: First, the electronic device 200 sends the SMS message to the satellite 202 (for example, a satellite that supports messaging communication or a short message satellite). After receiving the SMS message, the satellite 202 sends the SMS message to the satellite messaging application platform 204 through the ground station 203. Then, the satellite messaging application platform 204 sends, to the satellite 202 through the ground station 203 and an uplink, a signal that includes the SMS message whose recipient is the electronic device 201. After receiving the signal sent by the ground station 203, a receiver of the satellite 202 amplifies the signal, and sends the amplified signal to the electronic device 201 through a downlink. Correspondingly, in the satellite communication network, a process in which the electronic device 201 sends the SMS message to the electronic device 200 may also be completed in a similar manner.

That the electronic device 200 is located in the satellite communication network, and the electronic device 201 is located in the cellular communications network is used as an example. When the electronic device 200 located in the satellite communication network sends the SMS message to the electronic device 201 located in the cellular network, the electronic device 200 sends, to the satellite 202 through the uplink, the signal including the SMS message. After amplifying the signal, the receiver of the satellite 202 sends the amplified signal to the ground station 203 through a transmitter. The ground station 203 sends the SMS message to the satellite messaging application platform 204; the satellite messaging application platform 204 sends the SMS message to an SMS message center in a mobile core network through the cellular gateway, and then the SMS message center sends the SMS message to the base station corresponding to the electronic device 201 through the mobile core network; and finally, the base station sends the SMS message to the electronic device 201, so that the SMS message is transmitted from the satellite communication network to the cellular network, and the electronic device 200 in the satellite communication network communicates with the electronic device 201 in the cellular network.

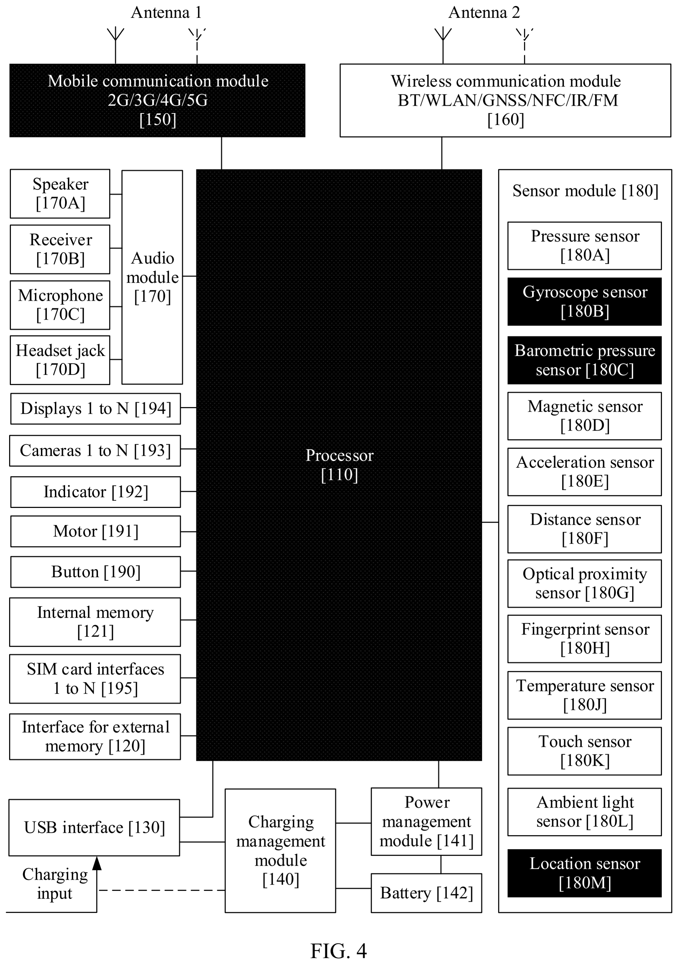

The electronic device 200 and the electronic device 201 that can implement information transmission or make the voice or video call with the satellite 202 need to have corresponding software and hardware configurations. For example, in terms of hardware, the electronic device 200 and the electronic device 201 need to be configured with a communication chip (for example, a mobile communication module shown in FIG. 4) that can communicate with the satellite, a radio frequency channel that can be used to perform signal receiving and sending with the satellite and a corresponding power amplifier, and a signal receiver. In terms of software, the electronic device 200 and the electronic device 201 need to support a protocol of a short message voice or video call, and need to have application software that supports the voice or video call, short message editing, and sending and/or receiving. Therefore, the electronic device 200 and the electronic device 201 may establish an information transmission channel with the satellite 202.

It may be understood that in FIG. 1A and FIG. 1B, that the satellite is a BeiDou satellite is used as an example.

The satellite in embodiments of this application may be a low-orbit satellite, a medium-orbit satellite, or a high-orbit satellite. Based on different orbital altitudes, satellites may be classified into the following three types: a geostationary earth orbit (geostationary earth orbit, GEO) satellite, also referred to as a synchronous orbit satellite or a high-orbit satellite; a medium earth orbit (medium earth orbit, MEO) satellite, also a medium-orbit satellite for short; and a low earth orbit (low earth orbit, LEO) satellite, also a low-orbit satellite for short.

An orbital altitude of the GEO satellite is 35786 km. Main advantages of the GEO satellite are being stationary relative to the ground and providing very large coverage. However, disadvantages of the GEO satellite are also relatively prominent. For example, a distance from the ground is excessively large and an antenna with a relatively large diameter is needed; a transmission delay is relatively large, being about 0.5 second, and cannot meet a requirement of a real-time service; and orbit resources are relatively in shortage, launch costs are high, and coverage cannot be provided for the bipolar regions.

An orbital altitude of the MEO satellite ranges from 2000 km to 35786 km. Global coverage can be achieved by using a small quantity of MEO satellites. The MEO satellite has a larger transmission delay than the LEO satellite. Currently, the MEO satellite is mainly used for positioning and navigation.

An orbital altitude of the LEO satellite ranges from 300 km to 2000 km. Compared with the MEO satellite and the GEO satellite, the LEO satellite has a lower orbital altitude, a smaller data transmission delay, a smaller power loss, and lower launch costs. Therefore, a communication network that is based on the LEO satellite has greatly progressed in recent years. The LEO satellite is used as an information access point, and a capability of the satellite to cover a wider area than the base station is fully utilized, to achieve efficient coverage of the air, an ocean, and a remote area. In addition, the LEO satellite may be integrated with a long term evolution (long term evolution, LTE) network or a future 5G (NR) network, and may provide wider coverage and better user experience for the user under the premise of using a same terminal device.

The electronic device 200 and the electronic device 201 that can implement information transmission or make the voice or video call with the satellite 202 need to have corresponding software and hardware configurations. For example, in terms of hardware, the electronic device 200 and the electronic device 201 need to be configured with a communication chip (for example, a mobile communication module shown in FIG. 4) that can communicate with the satellite, a radio frequency channel that can be used to perform signal receiving and sending with the satellite and a corresponding power amplifier, and a signal receiver. In terms of software, the electronic device 200 and the electronic device 201 need to support a protocol of a short message voice or video call, and need to have application software that supports the voice or video call, short message editing, and sending and/or receiving. Therefore, the electronic device 200 and the electronic device 201 may establish an information transmission channel with the satellite 202.

Optionally, the application software (namely, the application software that supports the voice or video call, short message editing, and sending and/or receiving) that supports communication between the electronic device 200 and the satellite 202 (for example, the MeeTime application 201 shown in FIG. 2A) and the application software (for example, the messaging application 200 shown in FIG. 2A) that supports communication between the electronic device and the base station in the cellular network may be same software, or may be different software. This is not limited in embodiments of this application.

Optionally, the application software that supports short message editing, and sending and/or receiving and the application software that supports the voice or video call may be different application software, or may be same application software. This is not limited in embodiments of this application.

Optionally, the system described in FIG. 1A and FIG. 1B may further include a server. The server stores at least a first list. The electronic device 200 may obtain the first list by interacting with the server.

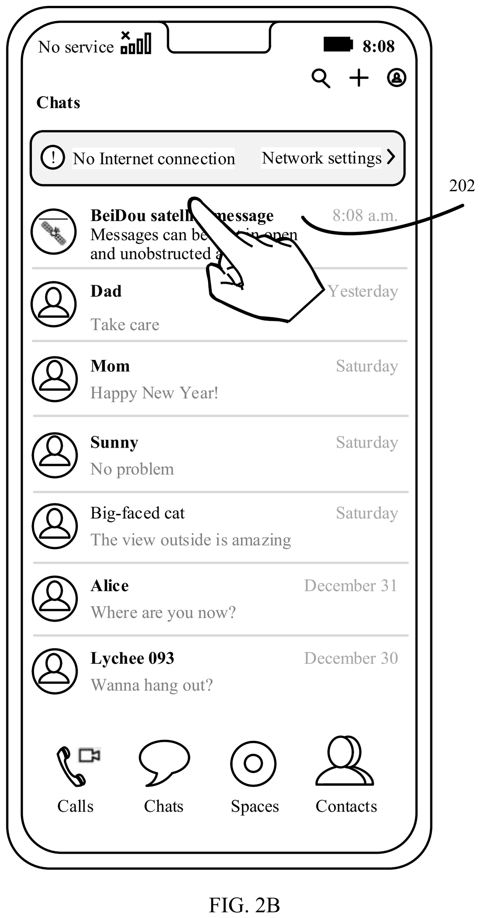

In the following uses an example in which both the electronic device 200 and the electronic device 201 are mobile phones, where for ease of distinguishing, the electronic device 200 is used as a mobile phone A, the electronic device 201 is used as a mobile phone B, the mobile phone A (namely, a sender mobile phone) sends an SMS message to the mobile phone B (namely, a receiver mobile phone) via the satellite, and the first application is a MeeTime application. As shown in FIG. 2A, there are one or more applications running in the mobile phone A, including the MeeTime application 201. The mobile phone A detects an open operation (for example, tapping the MeeTime application 201) triggered by the user on the MeeTime application 201; and the mobile phone A displays a messaging interface shown in FIG. 2B in response to the open operation. A plurality of session messages are displayed in the messaging interface shown in FIG. 2B, for example, "BeiDou satellite message" 202.

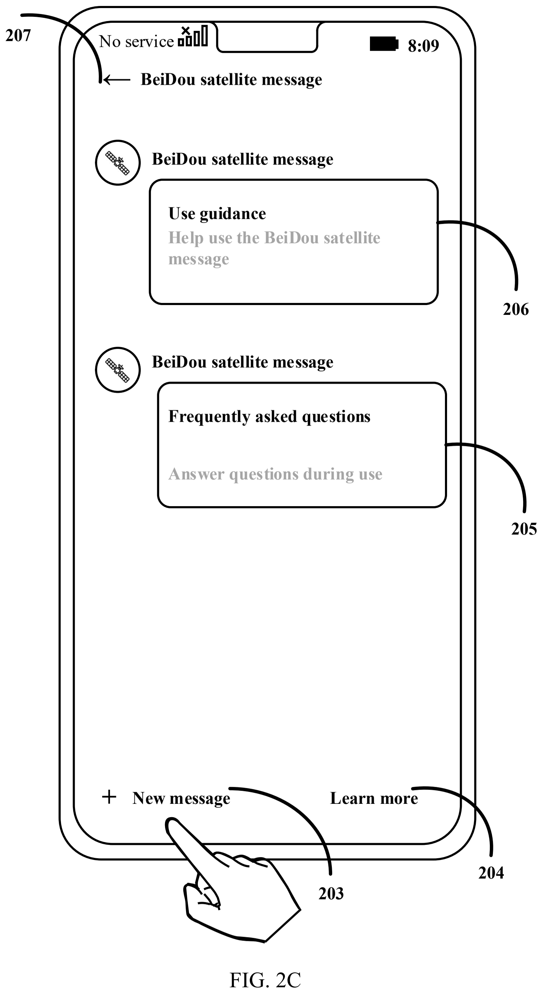

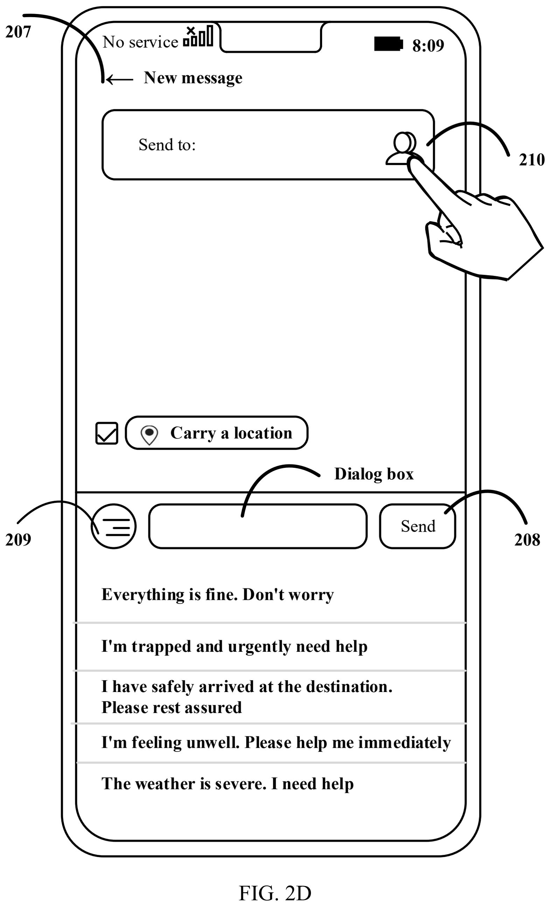

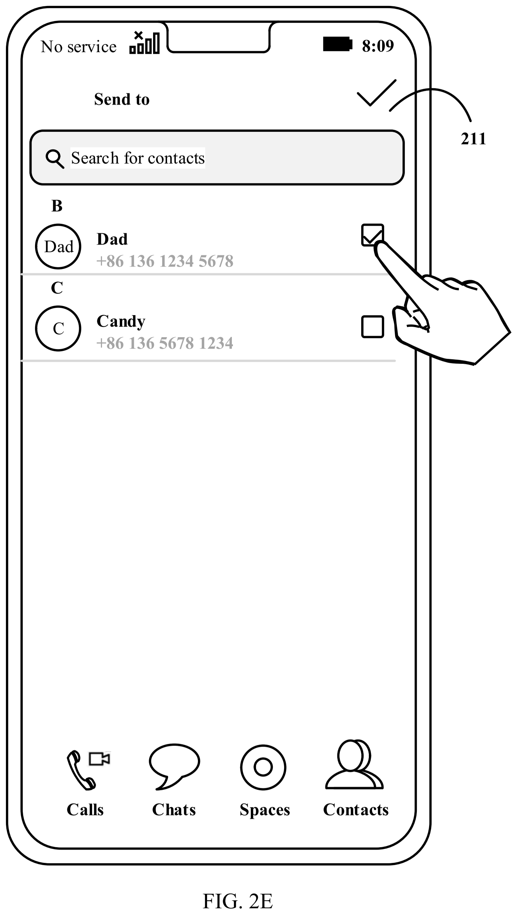

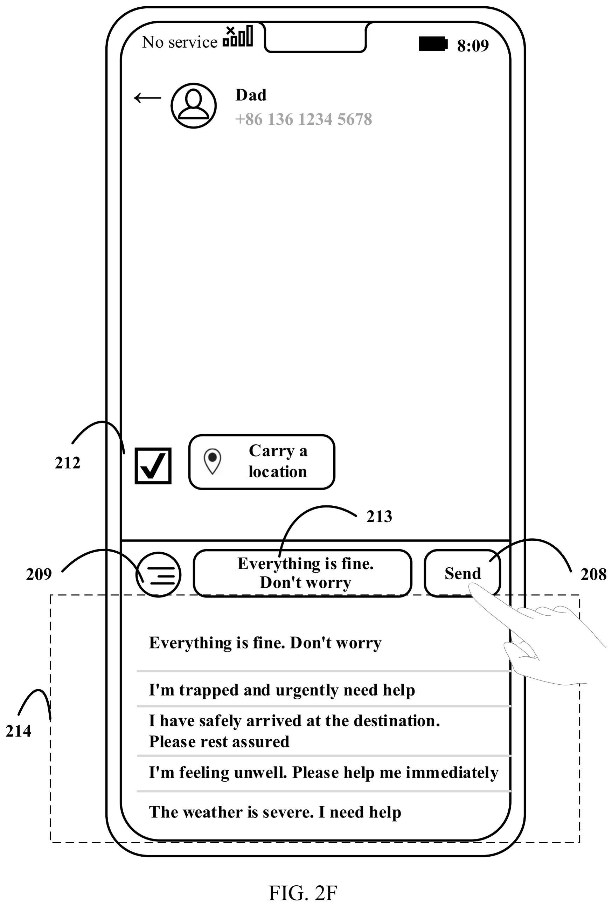

The user may tap the "BeiDou satellite message" 202, to trigger the mobile phone A to enter a BeiDou satellite messaging interface shown in FIG. 2C. At least a first function option (namely, a new message 203) is displayed in the BeiDou satellite messaging interface shown in FIG. 2C. When the BeiDou satellite message needs to be sent, the user may tap the new message 203, to trigger the mobile phone A to enter a messaging session interface shown in FIG. 2D. In the messaging session interface shown in FIG. 2D, the user may tap a contact control 210, to trigger the mobile phone A to enter a contact interface shown in FIG. 2E. In the contact interface shown in FIG. 2E, the user may select a target contact (namely, contact information of the user of the receiver mobile phone). For example, the selected target contact is a contact "Dad". After the user selects the target contact, the user may tap a confirmation control 211 in the interface. In response to the confirmation control 211 being triggered, the mobile phone A enters a messaging session interface shown in FIG. 2F. As shown in FIG. 2F, a location control option 212, a dialog input box 213, and a sending control 208 are displayed in the messaging session interface. The user may input message content in the dialog input box 213. For example, as shown in FIG. 2F, the message content may be "Everything is fine. Don't worry". Then, the user may tap the sending control 208, so that the mobile phone A detects an operation that the sending control 208 is triggered. The mobile phone A enters a satellite searching phase in response to the operation that the sending control 208 is triggered. After the mobile phone A successfully searches for a satellite (for example, the mobile phone A determines that current satellite communication quality meets a communication requirement), the mobile phone A sends an SMS message to the satellite, so that the satellite forwards the SMS message to the mobile phone B in the communication manner shown in FIG. 1B.

To help the receiver mobile phone understand current location information of the sender mobile phone, content of the SMS message sent by the mobile phone A to the satellite not only includes the message content input by the user in the dialog input box 213, but also may include the location information of the mobile phone A detected by the mobile phone A. For example, the location information of the mobile phone A may be geographical location information of the mobile phone A (for example, current longitude and latitude information of the mobile phone A).

In some embodiments of this application, in the messaging session interface shown in FIG. 2F, if the location control option 212 is in a selected state, the SMS message sent by the mobile phone A to the mobile phone B carries the location information of the mobile phone A detected by the mobile phone A. In a possible embodiment of this application, the location control option 212 in the messaging session interface shown in FIG. 2F is selected by default, or the location control option 212 may be changed from being not selected to being in a selected state based on an operation of the user.

For example, as shown in FIG. 2F, if a mark of the location control option 212 is 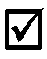 , it indicates that the location control option 212 is selected.

For example, when the mobile phone A detects that the sending control 208 is triggered, if the mobile phone A determines that the location control option 212 is not selected, the mobile phone A prompts the user to set the location control option 212 to be in the selected state, or the mobile phone A automatically sets the location control option 212 to be in the selected state. For example, if the location control option 212 is marked as □, it indicates that the location control option 212 is not selected.

In a possible embodiment of this application, one or more SMS message content templates may be preset in the mobile phone A. For example, "Everything is fine. Don't worry", or "I'm trapped and urgently need help". When the mobile phone A enters the messaging session interface shown in FIG. 2F, the mobile phone A may further display the SMS message content template 214 in the messaging session interface. In this way, the user can select appropriate template content as required. After the user selects the appropriate template content, the user may tap the template content selected by the user, to trigger the mobile phone A to display, in the dialog input box 213, the template content selected by the user.

In addition to selecting the template content, the user may also input related SMS message content based on a requirement of the user. This is not limited in embodiments of this application. For how the user inputs a text SMS message in the messaging session interface, refer to the descriptions in the conventional technology. Details are not described herein again.

Optionally, to help the user learn more about related content of BeiDou satellite communication (for example, sending an SMS message or making a voice or video call), a first prompt card 206, a second prompt card 205, and a second function option 204 (that is, learn more) are further displayed in the interface shown in FIG. 2C. When detecting that the first prompt card 206 is triggered, the mobile phone A displays an operation guide for using the BeiDou satellite communication. When detecting that the second prompt card 205 is triggered, the mobile phone A displays a related problem encountered in a process of using the BeiDou satellite communication and a solution to the problem. If the mobile phone A detects that the second function option 204 is triggered, the mobile phone A displays related content in the process of the BeiDou satellite communication.

Optionally, the interface shown in FIG. 2C may further include a return control 207. In this way, the return control 207 may be triggered in a process in which the user does not need to use the BeiDou satellite communication, so that the mobile phone A returns to the interface shown in FIG. 2B in response to the return control 207.

In a possible embodiment of this application, the mobile phone A detects an operation, of opening the first application, that is input by the user. In response to an open operation on the first application, the mobile phone A starts to monitor the location information and/or a moving speed of the mobile phone A. For example, as shown in FIG. 2A, if the mobile phone A detects an operation, of opening the MeeTime application 201, that is triggered by the user, the mobile phone A starts a location manager service in the mobile phone A to start to monitor the location information and/or the moving speed of the mobile phone A.

For example, when the mobile phone A detects the operation, of opening the first application, that is input by the user or the operation of tapping the sending control 208, if the mobile phone A determines that a current location service of the mobile phone A is not started, the mobile phone A prompts the user to start the location service of the mobile phone A, so that current location information of the mobile phone A is carried in the process of sending the SMS message by using the first application via the satellite.

In a possible embodiment of this application, in the satellite searching phase of the mobile phone A, a satellite with a strongest signal may be determined as a communication satellite. After determining the communication satellite, the mobile phone A may determine, based on the location information of the mobile phone A and location information of the communication satellite, a satellite transmission link direction used when the mobile phone A communicates with the communication satellite. The satellite transmission link direction is a direction from a location of the mobile phone A to a location of the communication satellite. The mobile phone A may further determine a radiation direction of a satellite antenna of the mobile phone A based on data such as geomagnetic data and posture data of the mobile phone A. Then, the mobile phone A may enable the radiation direction of the satellite antenna of the mobile phone A to align with the communication satellite based on the satellite transmission link direction and the radiation direction of the satellite antenna. In the descriptions of embodiments of this application, a process in which the mobile phone A aligns with the target satellite is referred to as satellite alignment. The radiation direction of the satellite antenna is a maximum gain direction of a signal used when the antenna transmits the signal, and signal strength in the direction is highest.

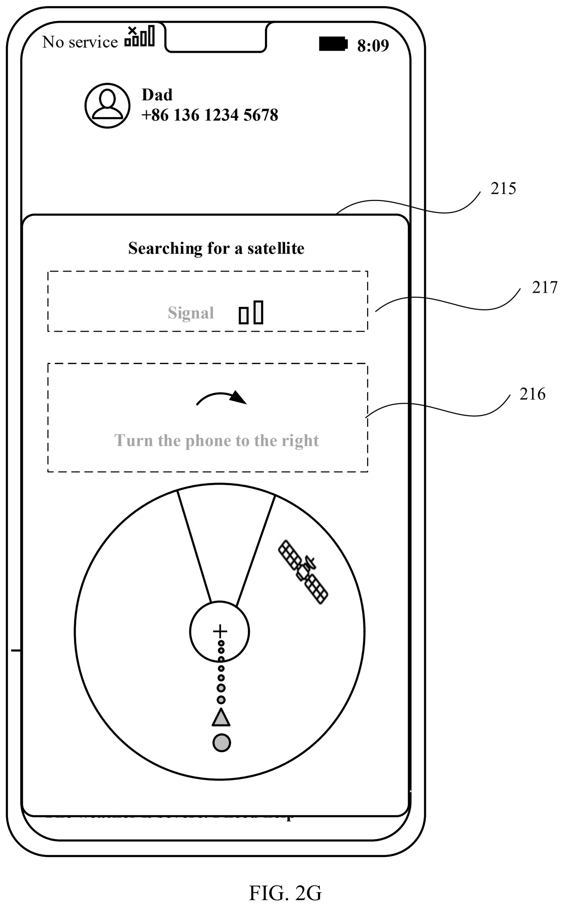

To help the user learn a communication state between the mobile phone A and the satellite, namely, satellite signal strength, when the sending control 208 is triggered, as shown in FIG. 2G, the mobile phone A may display prompt information indicating the satellite signal strength currently detected by the mobile phone A. In an example, as shown in FIG. 2G, the mobile phone A displays a prompt card 215 including the prompt information. In an optional example, the prompt card 215 may be displayed in the interface shown in FIG. 2F. As shown in FIG. 2G, the prompt card 215 may display related information of the satellite searching phase of the mobile phone A, for example, signal strength 217.

For example, the prompt card 215 may further display guide information 216. The guide information 216 indicates the user to adjust an orientation of the mobile phone A (for example, turn the mobile phone A to the right). The user may adjust the orientation of the mobile phone A based on the guide information 216, to assist the mobile phone A in completing a satellite searching action as soon as possible.

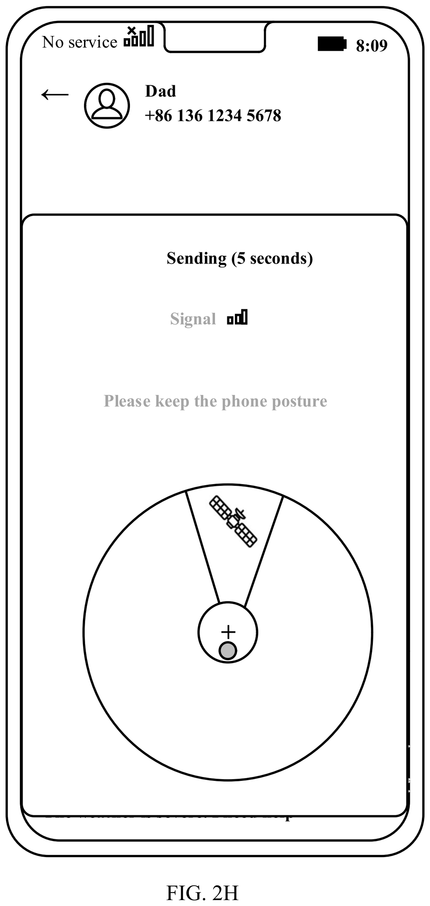

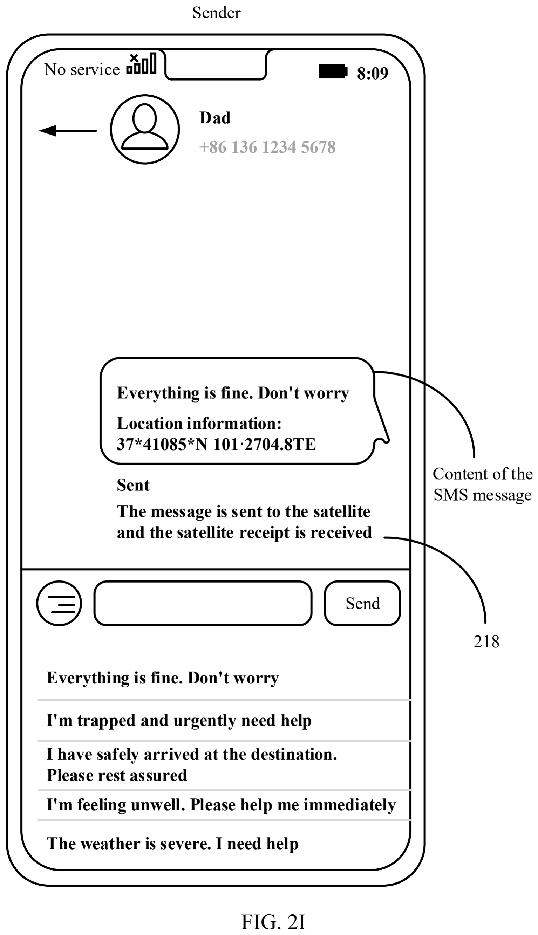

Optionally, after satellite searching succeeds, the mobile phone may display an interface shown in FIG. 2H. In the interface shown in FIG. 2H, a remaining sending time of the SMS message and guide information indicating the user to maintain the orientation of the sender mobile phone may be displayed to the user in a countdown manner. It may be understood that when sending of the SMS message is completed, the sender mobile phone may enter an interface shown in FIG. 2I, to inform the user that sending of the SMS message has completed (for example, a word "sent").

Optionally, when the sender mobile phone completes sending the SMS message and receives a satellite receipt, the sender mobile phone may display, to the user, prompt information indicating that the satellite receipt has been received.

Optionally, when the sender mobile phone completes sending the SMS message and does not receive the satellite receipt, the sender mobile phone may display, to the user, prompt information 218 indicating that the satellite receipt is not received. Then, if the sender mobile phone receives the satellite receipt, the sender mobile phone may update the prompt information indicating that the satellite receipt is not received to the prompt information indicating that the satellite receipt has been received.

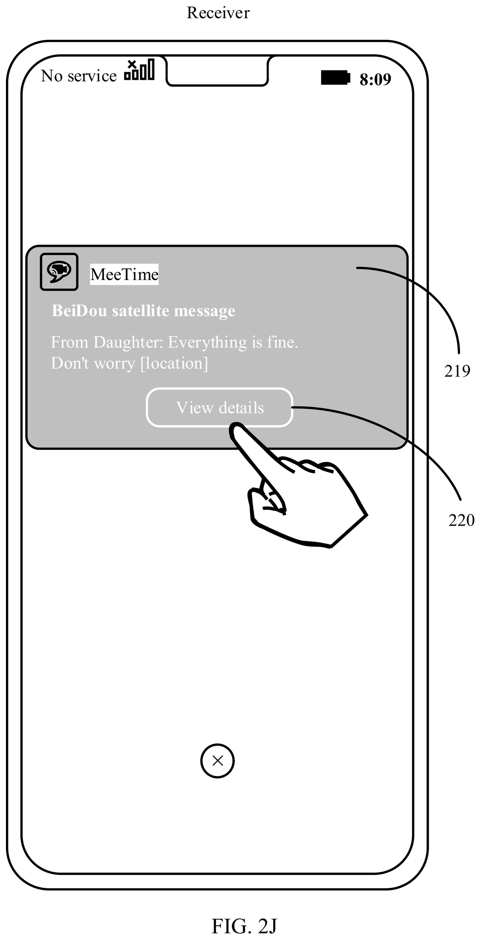

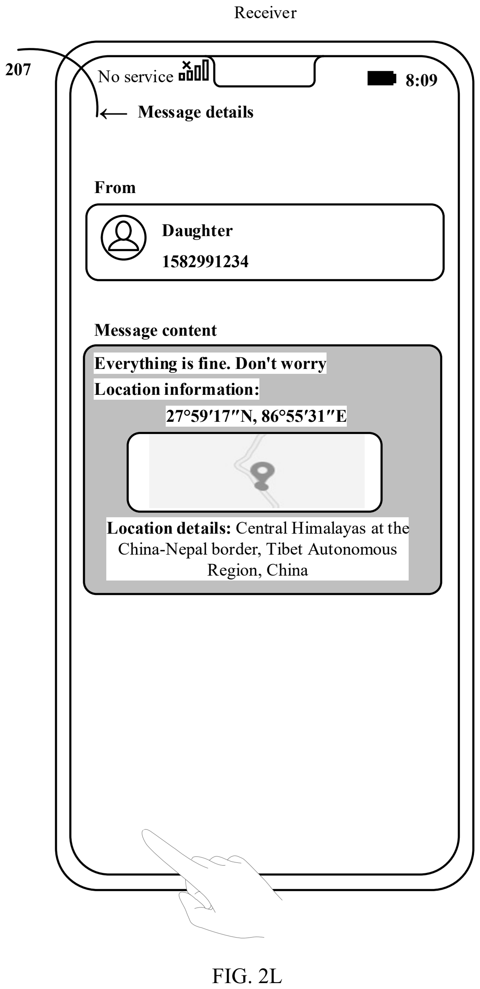

FIG. 2J is a diagram of an interface in which a receiver mobile phone receives a satellite SMS message. After receiving an SMS message of a sender mobile phone through a ground station serving an area in which the receiver mobile phone is located, the receiver mobile phone displays a prompt card 219 in the interface of the receiver mobile phone. The prompt card 219 may display a source of the SMS message and content of the SMS message, for example, a specific contact from which the SMS message is sent. For example, as shown in FIG. 2J, that the SMS message is from a contact "daughter" is displayed. The user may tap the prompt card 219, to trigger the mobile phone to display content of the received SMS message, that is, display a messaging interface shown in FIG. 2L. As shown in FIG. 2J, the messaging interface displays specific content of the received SMS message and location information of the sender mobile phone (for example, a mobile phone of the contact "daughter").

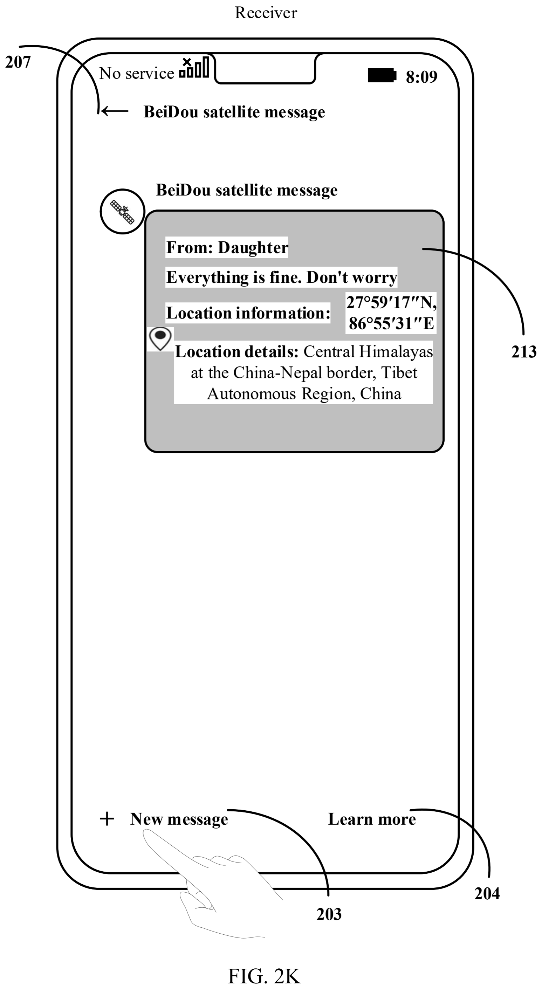

In a possible embodiment of this application, the prompt card 219 further displays a details control 220. The user may trigger the details control 220 to trigger the mobile phone to display the messaging interface shown in FIG. 2J. Specifically, when the mobile phone detects that the details control 220 is triggered, the mobile phone enters an interface shown in FIG. 2K. A BeiDou satellite message service card 213 is displayed in the interface shown in FIG. 2K. After detecting an operation on the BeiDou satellite message service card 213, the receiver mobile phone may display the interface shown in FIG. 2J, to view specific content of the SMS message.

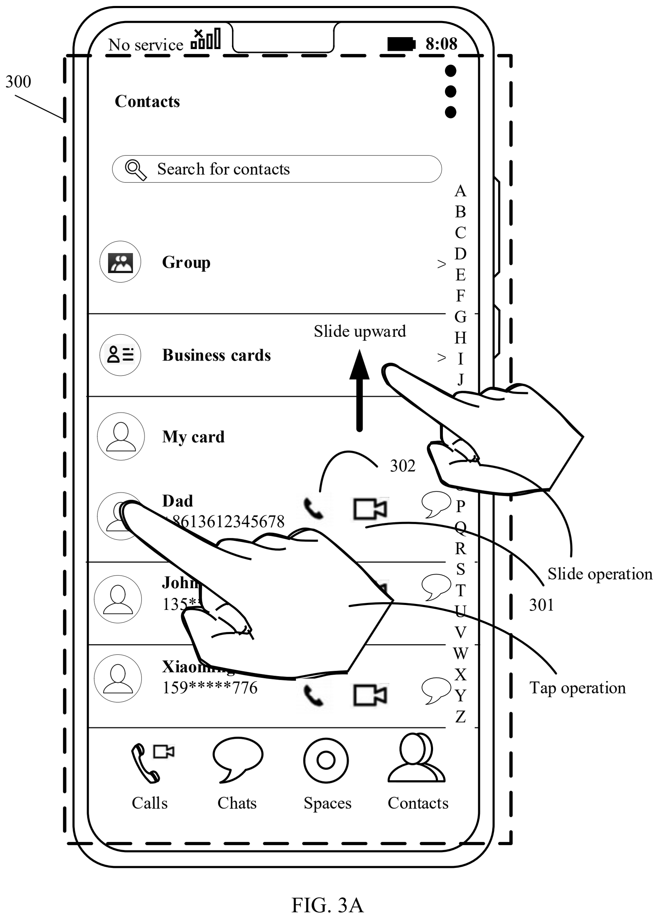

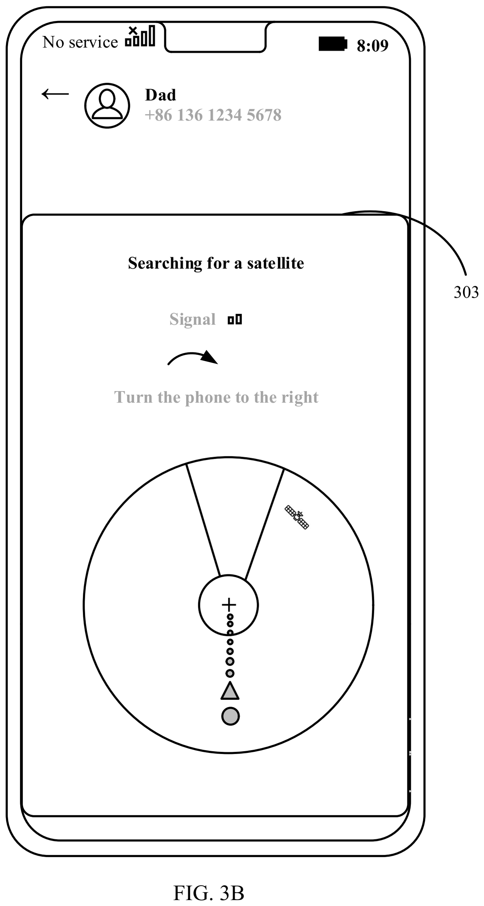

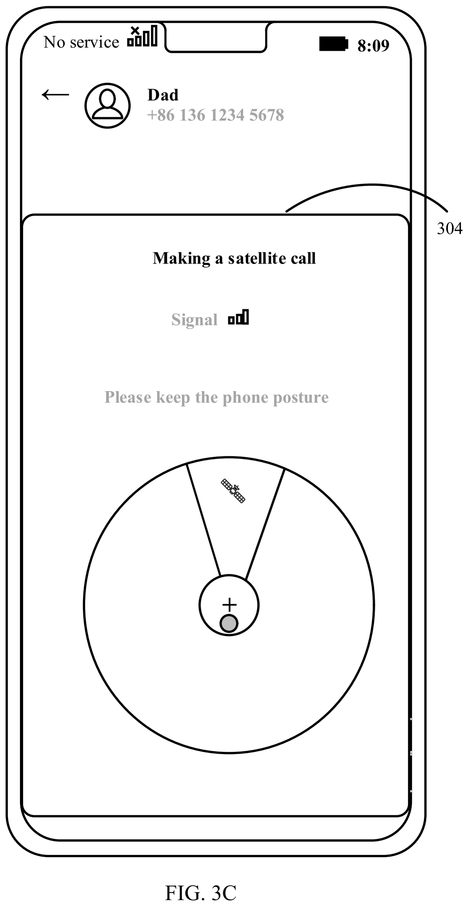

The following uses an example in which the electronic device 200 is a sender mobile phone (namely, a mobile phone A), the electronic device 201 is a receiver mobile phone (namely, a mobile phone B), the sender mobile phone makes a voice call to the receiver mobile phone via the satellite, and the first application is a MeeTime application. As shown in FIG. 2A, after detecting an open operation of the user on the MeeTime application 201 and another operation of the user, the mobile phone A displays a contact interface shown in FIG. 3A; and in the contact interface shown in FIG. 3A, the user may perform a sliding operation to switch contact information currently displayed in the interface. An example in which a target contact selected by the user is a contact "Dad" is used. When the user selects the contact "Dad" as a receiver, the user may tap a voice call control 302 or a video call control 301 to trigger the mobile phone A to initiate a satellite voice or video call. When the user needs to make a BeiDou satellite voice call, the user may tap the voice call control 302. When the mobile phone A detects that the voice call control 302 is triggered, the mobile phone A enters a satellite searching phase shown in FIG. 3B. Alternatively, when the user needs to make a BeiDou satellite video call, the user may tap the video call control 301. When the mobile phone A detects that the video call control 301 is triggered, the mobile phone A enters a satellite searching phase shown in FIG. 3B and FIG. 3C. When the mobile phone A successfully searches for a satellite, the mobile phone A may display an interface shown in FIG. 3C. If the mobile phone A successfully searches for the satellite, the mobile phone A sends a call request of the mobile phone A to the satellite, and the satellite forwards the call request to the mobile phone B in the manner shown in FIG. 1A or FIG. 1B. When the mobile phone B agrees to the call request of the mobile phone A, the mobile phone A may make a satellite-based voice call or video call with the mobile phone B.

As shown in FIG. 4, the electronic device being a mobile phone is used as an example. The mobile phone may include: a processor 110, an interface for external memory 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a positioning module, a subscriber identity module (subscriber identity module, SIM) card interface 195, and the like.

In embodiments of this application, the mobile phone may include a first processor and a second processor. The first processor may be, for example, an application processor (application processor, AP), and the second processor may be, for example, a system coprocessor (a sensor hub). In addition, the mobile phone in embodiments of this application may be equipped with a Qualcomm chip platform. On this basis, the system coprocessor may be, for example, referred to as a sensor execution environment (Sensor Execution Environment, SEE).

It should be noted that the processor 110 included in the mobile phone shown in FIG. 4 may be a first processor or a second processor; or the processor 110 includes a first processor and a second processor. This is not limited in embodiments of this application.

It may be understood that the structure shown in embodiments does not constitute a specific limitation on the mobile phone. In some other embodiments, the mobile phone may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the mobile phone. The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data that has been used or is cyclically used by the processor 110. If the processor 110 needs to use the instructions or the data again, the processor 110 may directly invoke the instructions or the data from the memory. This avoids repeated access, reduces a waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that an interface connection relationship between the modules illustrated in embodiments is merely an example for description, and constitutes no limitation on the structure of the mobile phone. In some other embodiments, the mobile phone may alternatively use an interface connection manner different from that in the foregoing embodiments, or use a combination of a plurality of interface connection manners.

The charging management module 140 is configured to receive a charging input from a charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input via a wireless charging coil of the mobile phone. While charging the battery 142, the charging management module 140 may further supply power to the mobile phone through the power management module 141.

The power management module 141 is configured to be connected to the battery 142, the charging management module 140, and the processor 110. The power management module 141 receives an input of the battery 142 and/or the charging management module 140, to supply power to the processor 110, the internal memory 121, an external memory, the display 194, the camera 193, the wireless communication module 160, and the like. The power management module 141 may be further configured to monitor a parameter such as a battery capacity, a battery cycle count, or a battery health state (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the mobile phone may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the mobile phone may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a solution, applied to the mobile phone, to various wireless communication including 2G, 3G, 4G, 5G, or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110. For example, when the mobile phone supports communication with a satellite (that is, has a satellite communication function), the mobile phone may communicate with the satellite through the mobile communication module 150.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal.

The wireless communication module 160 may provide a solution, applied to the mobile phone, to wireless communication including a wireless local area network (wireless local area network, WLAN) (for example, a wireless fidelity (wireless fidelity, Wi-Fi) network), Bluetooth, a global navigation satellite system (global navigation satellite system, GNSS), frequency modulation (frequency modulation, FM), near field communication (near field communication, NFC), an infrared (infrared, IR) technology, or the like. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the mobile phone, the antenna 1 and the mobile communication module 150 are coupled, and the antenna 2 and the wireless communication module 160 are coupled, so that the mobile phone can communicate with a network and another device by using a wireless communication technology. The wireless communication technology may include a global system for mobile communication (global system for mobile communication, GSM), a general packet radio service (general packet radio service, GPRS), code division multiple access (code division multiple access, CDMA), wideband code division multiple access (wideband code division multiple access, WCDMA), time division code division multiple access (time division code division multiple access, TD-SCDMA), long term evolution (long term evolution, LTE), BT, GNSS, WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The mobile phone implements a display function through the GPU, the display 194, the application processor, and the like. The GPU is a microprocessor for image processing, and is connected to the display 194 and the application processor. The GPU is configured to: perform mathematical and geometric computing, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-OLED, a micro-OLED, a quantum dot light-emitting diode (quantum dot light-emitting diode, QLED), or the like.

The mobile phone may implement a photographing function through the ISP, the camera 193, the video codec, the GPU, the display 194, the application processor, and the like.

The ISP may be configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the mobile phone may include one or N cameras 193, where N is a positive integer greater than 1.

The digital signal processor is configured to process a digital signal, and may process another digital signal in addition to the digital image signal. For example, when the mobile phone selects a frequency, the digital signal processor is configured to perform Fourier transform on energy of the frequency.

The video codec is configured to compress or decompress a digital video. The mobile phone may support one or more video codecs. In this way, the mobile phone can play or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information by referring to a structure of a biological neural network, for example, by referring to a transfer mode between human brain neurons; and may further continuously perform self-learning. The NPU may be used to implement applications such as intelligent cognition of the mobile phone, for example, image recognition, facial recognition, voice recognition, and text understanding.

The mobile phone may implement an audio function such as music playing or recording through the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to encode and decode an audio signal. In some embodiments, the audio module 170 may be disposed in the processor 110, or some functional modules in the audio module 170 are disposed in the processor 110. The speaker 170A, also referred to as a "loudspeaker", is configured to convert an audio electrical signal into a sound signal. The receiver 170B, also referred to as an "earpiece", is configured to convert an audio electrical signal into a sound signal. The microphone 170C, also referred to as a "mike" or a "mic", is configured to convert a sound signal into an electrical signal.

The headset jack 170D is configured to be connected to a wired headset. The headset jack 170D may be the USB interface 130, or may be a 3.5 mm open mobile terminal platform (open mobile terminal platform, OMTP) standard interface, or a cellular telecommunications industry association of the USA (cellular telecommunications industry association of the USA, CTIA) standard interface.

The interface for external memory 120 may be configured to be connected to an external storage card, for example, a micro SD card, to extend a storage capability of the mobile phone. The external storage card communicates with the processor 110 through the interface for external memory 120, to implement a data storage function. For example, files such as audios or videos are stored in the external storage card.

The internal memory 121 may be configured to store computer-executable program code. The executable program code includes instructions. The processor 110 executes various function applications and data processing of the mobile phone by running the instructions stored in the internal memory 121. For example, in embodiments of this application, the processor 110 may execute the instructions stored in the internal memory 121, and the internal memory 121 may include a program storage area and a data storage area.

The program storage area may store an operating system, an application required by at least one function (for example, a sound playing function or an image playing function), and the like. The data storage area may store data (for example, audio data and a phone book) and the like created in a process of using the mobile phone. In addition, the internal memory 121 may include a high-speed random access memory, or may include a non-volatile memory, for example, at least one magnetic disk storage device, a flash memory, or a universal flash storage (universal flash storage, UFS).

The button 190 includes a power button, a volume button, and the like. The button 190 may be a mechanical button, or may be a touch button. The motor 191 may generate a vibration prompt. The motor 191 may be configured to provide an incoming call vibration prompt and a touch vibration feedback. The indicator 192 may be an indicator light, and may be configured to indicate a charging state and a power change, or may be configured to indicate a message, a missed call, a notification, and the like. The SIM card interface 195 is configured to be connected to a SIM card. The SIM card may be inserted into the SIM card interface 195 or removed from the SIM card interface 195, to implement contact with or separation from the mobile phone. The mobile phone may support one or N SIM card interfaces, where N is a positive integer greater than 1. The SIM card interface 195 may support a nano-SIM card, a micro-SIM card, a SIM card, and the like.

The positioning module may provide a solution to a global navigation satellite system (global navigation satellite system, GNSS), to implement an included positioning function of the mobile phone. The positioning module may receive an electromagnetic wave through the antenna 2, perform frequency modulation and filtering processing on an electromagnetic wave signal, and send the processed signal to the processor 110, so that the processor 110 determines location information of the device.

In some embodiments, in the mobile phone, the antenna 1 is coupled to the mobile communication module 150, and the antenna 2 is coupled to the positioning module. In addition, the GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a location sensor 180M, and the like.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, for example, a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The mobile phone determines pressure strength based on the change of the capacitance. When a touch operation is performed on the display 194, the mobile phone detects strength of the touch operation through the pressure sensor 180A. The mobile phone may also calculate a touch location based on a detection signal of the pressure sensor 180A. In some embodiments, touch operations that are performed in a same touch location but have different touch operation strength may correspond to different operation instructions. For example, when a touch operation whose touch operation strength is less than a first pressure threshold is performed on a messaging application icon, an instruction for viewing an SMS message is performed. When a touch operation whose touch operation strength is greater than or equal to the first pressure threshold is performed on the messaging application icon, an instruction for creating a new SMS message is performed.

The gyroscope sensor 180B may be configured to determine a motion posture of the mobile phone. In some embodiments, angular velocities of the mobile phone around three axes (namely, x, y, and z axes) may be determined through the gyroscope sensor 180B. The gyroscope sensor 180B may be configured to implement image stabilization during photographing. For example, when the shutter is pressed, the gyroscope sensor 180B detects an angle at which the mobile phone jitters, obtains, through computing based on the angle, a distance for which a lens module needs to compensate, and allows the lens to cancel the jitter of the mobile phone through reverse motion, to implement image stabilization. The gyroscope sensor 180B may also be used in a navigation scenario and a somatic game scenario. Certainly, in embodiments of this application, in a satellite searching phase of the mobile phone, the gyroscope sensor 180B is configured to detect a rotation angle of the mobile phone, so that the mobile phone completes a satellite searching action.

The barometric pressure sensor 180C is configured to measure barometric pressure. In some embodiments, the mobile phone computes an altitude based on a barometric pressure value measured by the barometric pressure sensor 180C, to assist in positioning and navigation. For example, in embodiments of this application, the barometric pressure may be measured by the barometric pressure sensor 180C when the mobile phone is in a flight scenario, to obtain an altitude at which the mobile phone is currently located.

The magnetic sensor 180D includes a Hall sensor. The mobile phone may detect opening and closing of a flip cover through the magnetic sensor 180D. In some embodiments, when the mobile phone is a flip phone, the mobile phone may detect opening and closing of a flip cover based on the magnetic sensor 180D. Further, a feature such as automatic unlocking of the flip cover is set based on a detected opening or closing state of a leather case or a detected opening or closing state of the flip cover.

The acceleration sensor 180E may detect magnitudes of accelerations of the mobile phone in various directions (usually on three axes). When the mobile phone is still, a magnitude and a direction of gravity may be detected. The acceleration sensor 180E may be further configured to identify a posture of the mobile phone, and is applied to an application such as screen switching between a landscape mode and a portrait mode, or a pedometer. Certainly, the acceleration sensor 180E may be further configured to determine a moving speed of the mobile phone. In embodiments of this application, the mobile phone determines the moving speed of the mobile phone through the acceleration sensor 180E, and then the mobile phone determines, based on the moving speed of the mobile phone, whether the speed of the mobile phone is greater than or equal to a preset speed threshold. When the speed of the mobile phone is greater than or equal to the preset speed threshold, the mobile phone determines to restrict the mobile phone from communicating with a satellite by using a first application.

The distance sensor 180F is configured to measure a distance. The mobile phone may measure a distance through infrared light or a laser. In some embodiments, in a photographing scenario, the mobile phone may measure a distance through the distance sensor 180F, to implement quick focusing.

The optical proximity sensor 180G may include, for example, a light-emitting diode (LED) and an optical detector, for example, a photodiode. The light-emitting diode may be an infrared light-emitting diode. The mobile phone emits infrared light by using the light-emitting diode. The mobile phone detects infrared reflected light from a nearby object by using the photodiode. When sufficient reflected light is detected, it may be determined that there is an object near the mobile phone. When insufficient reflected light is detected, the mobile phone may determine that there is no object near the mobile phone. The mobile phone may detect, through the optical proximity sensor 180G, that the user holds the mobile phone close to an ear to make a call, to automatically perform screen-off for power saving. The optical proximity sensor 180G may also be used in a smart cover mode or a pocket mode to automatically perform screen unlocking or locking.

The ambient light sensor 180L is configured to sense ambient light brightness. The mobile phone may adaptively adjust brightness of the display 194 based on the sensed brightness of the ambient light. The ambient light sensor 180L may also be configured to automatically adjust white balance during photographing. The ambient light sensor 180L may also cooperate with the optical proximity sensor 180G to detect whether the mobile phone is in a pocket, to avoid an accidental touch.

The fingerprint sensor 180H is configured to collect a fingerprint. The mobile phone may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the mobile phone executes a temperature processing policy based on the temperature detected by the temperature sensor 180J. For example, when the temperature reported by the temperature sensor 180J exceeds a threshold, the mobile phone lowers performance of a processor near the temperature sensor 180J, to reduce power consumption for thermal protection. In some other embodiments, when the temperature is lower than another threshold, the mobile phone heats the battery 142, to avoid an abnormal shutdown of the mobile phone because of a low temperature. In some other embodiments, when the temperature is lower than still another threshold, the mobile phone boosts an output voltage of the battery 142, to avoid an abnormal shutdown because of a low temperature.

The touch sensor 180K is also referred to as a "touch panel". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of a touch event. A visual output related to the touch operation may be provided through the display 194. In some other embodiments, the touch sensor 180K may alternatively be disposed on a surface of the mobile phone and is at a location different from that of the display 194.

The location sensor 180M may obtain location information of the mobile phone, and convert the location information into an available output signal. For example, for the mobile phone, the location sensor 180M may be a global positioning system (global positioning system, GPS) sensor, and may determine longitude and latitude coordinates of the mobile phone. This is not limited in embodiments of this application. For example, the mobile phone is used as an example. The mobile phone in embodiments of this application may obtain a location (for example, longitude and latitude coordinates) of the mobile phone through the location sensor 180M, and determine, based on the location of the mobile phone, whether the mobile phone is located in a restricted satellite communication management and control area or an area in which satellite communication can be performed.

It may be understood that a structure illustrated in embodiments of this application does not constitute a specific limitation on the mobile phone. In some other embodiments of this application, the mobile phone may include more or fewer components than those shown in the figure, or combine some components, or split some components, or have different component arrangements. The components shown in the figure may be implemented by hardware, software, or a combination of software and hardware.

To make the technical solutions of this application clearer and easier to understand, the following describes the method in embodiments of this application by using an example with reference to a software architecture of a mobile phone.

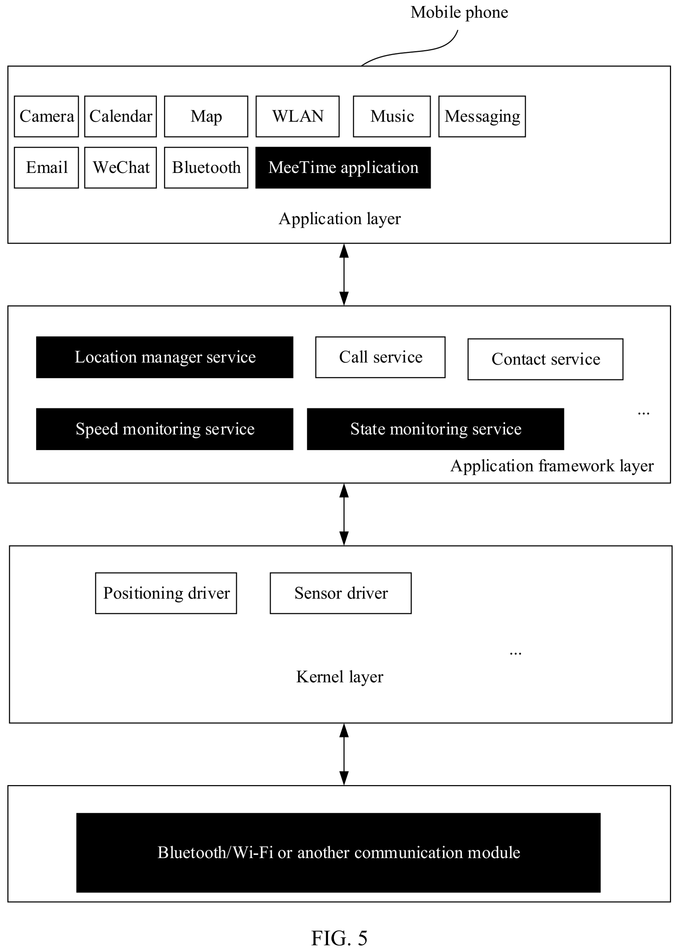

FIG. 5 is a block diagram of a software structure of a mobile phone according to an embodiment of this application.

In a layered architecture, software is divided into several layers, and each layer has a clear role and task. The layers communicate with each other through a software interface. In some embodiments, Android^{™} is divided into a plurality of layers: an application layer, an application framework layer, a hardware abstraction layer interface definition language (hardware abstraction layer interface definition language, HIDL) interface layer, a hardware abstraction layer (hardware abstraction layer, HAL), and a hardware layer from top to bottom. It should be understood that, in this specification, the Android^{™} system is used as an example for description. In another operating system (for example, a HarmonyOS^{™} system or an iOS^{™} system), the solutions of this application can also be implemented provided that functions implemented by the functional modules are similar to those in embodiments of this application.

The application layer may include a series of application packages (Android application packages, APK).

As shown in FIG. 5, various applications (applications, APP), for example, Camera, Calendar, Map, WLAN, Music, Messaging, Email, Satellite, and Bluetooth, may be installed at the application layer.

In embodiments of this application, an application, for example, a MeeTime application or a messaging application, used to implement satellite communication is deployed at the application layer.

The application framework layer provides an application programming interface (application programming interface, API) and a programming framework for an application at the application layer. The application framework layer includes some predefined functions.

In embodiments of this application, a location manager (Location Manager) service is deployed at the application framework layer. Certainly, the application framework layer may further include a window manager, a content provider, an activity manager, a view system, a phone manager, a resource manager, a notification manager, and the like. This is not limited in embodiments of this application.

After the MeeTime application is successfully connected to the location manager service, the MeeTime application may invoke an application programming interface (Application Programming Interface, API) of the location manager service, to obtain location information of the mobile phone.

The window manager is configured to manage a window program. The window manager may obtain a size of a display, determine whether there is a status bar, perform screen locking, take a screenshot, and the like. The content provider is configured to: store and obtain data, and enable the data to be accessible to an application. The data may include a video, an image, an audio, calls that are made and answered, a browsing history and bookmarks, a phone book, and the like.

The view system includes visual controls such as a control for displaying a text and a control for displaying an image. The view system may be configured to construct an application. A display interface may include one or more views. For example, a display interface including a messaging notification icon may include a text display view and an image display view.

The phone manager is configured to provide a communication function of the mobile phone, for example, management of a call state (including answering, hanging up, or the like).

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without requiring user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on a screen in a form of a dialog window. For example, text information is prompted in the status bar, an alert tone is made, the mobile phone vibrates, or an indicator blinks.

The application layer and the application framework layer run on a virtual machine. The virtual machine executes Java files of the application layer and the application framework layer as binary files. The virtual machine is configured to implement functions such as object lifecycle management, stack management, thread management, security and exception management, and garbage collection.

Still as shown in FIG. 5, the system library, the kernel layer, and the like below the application framework layer may be referred to as an underlying system. The system library of the underlying system includes a state monitoring service and a speed monitoring service. The state monitoring service may identify a current motion state of the mobile phone. Specifically, a sensor service (sensor service) may be invoked to start an acceleration sensor for detection. The state monitoring service may determine, based on motion data reported by the acceleration sensor, whether the current motion state of the mobile phone is a static state or a motion state. The state monitoring service may report the determined current motion state of the mobile phone to the activity manager service. The speed monitoring service may identify a current moving speed of the mobile phone. Specifically, the sensor service (sensor service) may be invoked to start the acceleration sensor for detection.

The kernel layer of the underlying system is a layer between hardware and software, and the kernel layer includes a positioning driver and a sensor driver. Optionally, the kernel layer may further include a display driver, an audio driver Wi-Fi driver, a modem driver, a Bluetooth driver, and the like. This is not limited in embodiments of this application.

An Android runtime includes a core library and a virtual machine. The Android runtime is responsible for scheduling and management of the Android system.

The core library includes two parts: a performance function that needs to be invoked in Java language and a core library of Android. The application layer and the application framework layer run on the virtual machine. The virtual machine executes Java files of the application layer and the application framework layer as binary files. The virtual machine is configured to implement functions such as object lifecycle management, stack management, thread management, security and exception management, and garbage collection.

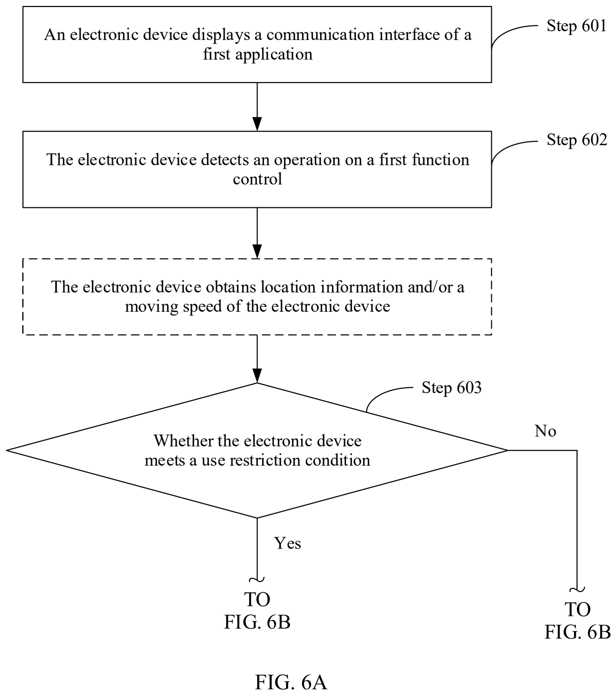

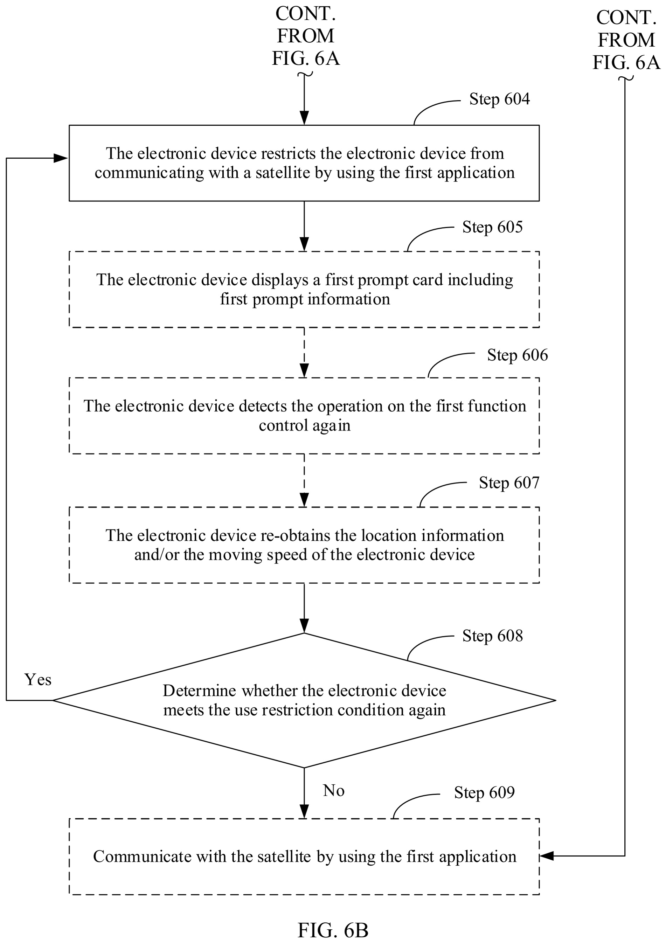

FIG. 6A and FIG. 6B show a specific implementation of a method for restricting use of satellite communication according to an embodiment of this application. The method is applied to an electronic device. The electronic device has a first application that supports communication between the electronic device and a satellite. The method includes the following steps.

Step 601: The electronic device displays a communication interface of the first application, where the communication interface includes a first function control, and the first function control is used to trigger the electronic device to communicate with the satellite by using the first application.

For example, that the first function control is triggered and the electronic device communicates with the satellite by using the first application may include: The electronic device sends, to the satellite, an SMS message input by the user in the first application, or the electronic device sends, to the satellite, a voice or video call request triggered by the user by using the first application.

As shown in FIG. 2F, when the communication interface of the first application is the messaging session interface shown in FIG. 2F, the first function control may be the sending control 208. If the electronic device detects that the sending control 208 is triggered, the electronic device may send, to the satellite, a text message input by the user in the messaging session interface and current location information of the electronic device as content of the SMS message, so that the satellite forwards the SMS message to an electronic device of a target contact selected by the user, and the electronic device communicates with another electronic device via the satellite.

As shown in FIG. 3A, when the communication interface of the first application is a call interface, the first function control may be the voice call control 302 or the video call control 301. If the electronic device detects that the voice call control 302 is triggered, the electronic device may send the voice call request to the satellite, so that the satellite forwards the voice call request to the electronic device of the target contact selected by the user. If the electronic device detects the video call control 301, the electronic device may send the video call request to the satellite in response to an operation that the video call control 301 is triggered, so that the satellite forwards the video call request to the electronic device of the target contact selected by the user.

Step 602: The electronic device detects an operation on the first function control.

For example, the operation on the first function control may be a tap operation. For example, the user taps the sending control 208, or taps the voice call control 302 or the video call control 301.

Step 603: In response to the operation on the first function control, the electronic device determines, based on location information of the electronic device and/or a moving speed of the electronic device, whether the electronic device meets a use restriction condition.

In the foregoing step 603, in response to the operation on the first function control, the electronic device may obtain the current location information of the electronic device and/or the current moving speed of the electronic device, and determine, based on the current location information of the electronic device and/or the current moving speed of the electronic device that are/is obtained in real time, whether the electronic device meets the use restriction condition.

In this embodiment of this application, when the electronic device meets the use restriction condition, it indicates that the electronic device currently cannot communicate with the satellite by using the first application.

In this embodiment of this application, when the electronic device does not meet the use restriction condition, it indicates that the electronic device currently can communicate with the satellite by using the first application.

Step 604: When the electronic device meets the use restriction condition, the electronic device restricts the electronic device from communicating with the satellite by using the first application.

That the electronic device restricts the electronic device from communicating with the satellite by using the first application may be understood as follows: When the use restriction condition is met, the electronic device does not send, to the satellite, the SMS message input by the user in the messaging session interface of the first application. For example, the electronic device does not respond to an operation triggered by the user in a voice call interface on the voice call control or the video call control, that is, does not send the voice call request or the video call request to the satellite.

In another possible embodiment of this application, as shown in FIG. 6A and FIG. 6B, the method provided in this embodiment of this application may further include the following step.

Step 609: When the electronic device determines that the electronic device does not meet the use restriction condition, the electronic device communicates with the satellite by using the first application.

Communication content being the SMS message input by the user in the messaging session interface of the first application is used as an example. When it is detected that the first function control is triggered and the electronic device does not meet the use restriction condition, as shown in FIG. 2I, the electronic device sends, to the satellite, text content input by the user in the messaging session interface of the first application and current geographical location information of the electronic device as the SMS message, so that the satellite sends the SMS message to the electronic device of the target contact.

In a possible embodiment of this application, to help the user understand a reason why the electronic device is restricted from communicating with the satellite by using the first application, as shown in FIG. 6A and FIG. 6B, in the method provided in this embodiment of this application, that the electronic device restricts the electronic device from communicating with the satellite by using the first application may further include the following step.

Step 605: The electronic device outputs first prompt information, where the first prompt information indicates the reason why the electronic device is restricted from communicating with the satellite by using the first application.

In an example, the first prompt information may be text prompt information or voice prompt information. Certainly, the first prompt information may alternatively be the text prompt information+a vibration reminder manner or the voice prompt information+a vibration reminder manner. This is not limited in this embodiment of this application.

Certainly, the reminder manner of the first prompt information may be a reminder manner set by default in the electronic device, or may be a reminder manner set by the user in a customized manner. This is not limited in this embodiment of this application.

In a possible implementation of this application, that the electronic device outputs the first prompt information includes: The electronic device displays a first prompt card including the first prompt information.

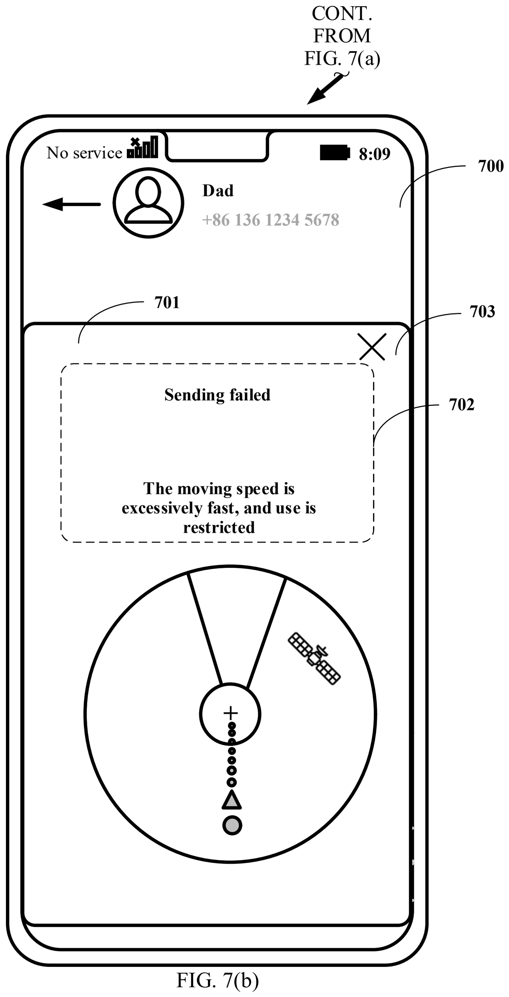

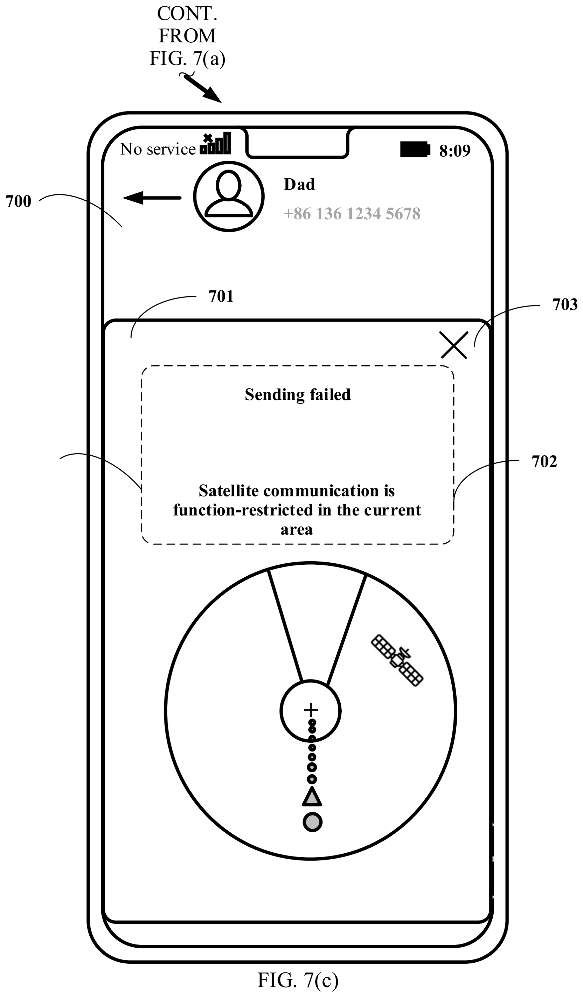

In an example, the electronic device may display the first prompt card in the communication interface of the first application. As shown in FIG. 7(b) or FIG. 7(c), for example, the communication interface is the messaging session interface. The electronic device may display a prompt card 701 or a prompt card 702 in the messaging session interface.

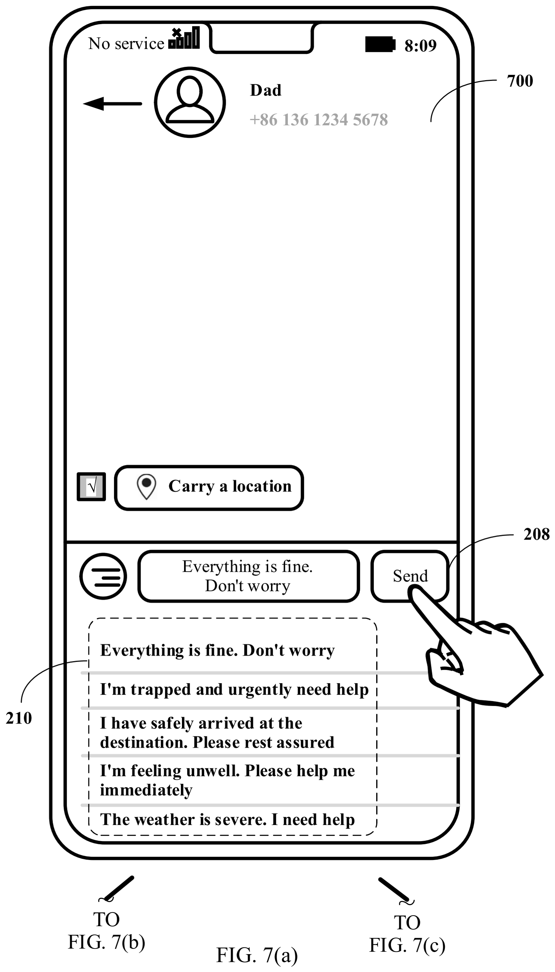

Reasons why the electronic device is restricted from communicating with the satellite vary in different situations. The first prompt information being the text prompt information is used as an example. The first prompt information may be displayed in a display interface of the electronic device in a manner of a card. As shown in FIG. 7(a) to FIG. 7(c), the mobile phone detects a tap operation triggered by the user in a messaging session interface 700 shown in FIG. 7(a) for the sending control 208. In response to the tap operation on the sending control 208, a mobile phone determines that a location of the mobile phone is within a communication management and control area or a moving speed of the mobile phone is greater than or equal to a preset speed threshold. In this case, as shown in FIG. 7(b) or FIG. 7(c), the mobile phone displays, in the messaging session interface 700, the prompt card including the first prompt information. Specifically, in a scenario in which the mobile phone is restricted from communicating with the satellite by using the first application because the moving speed of the mobile phone is greater than or equal to the preset speed threshold, the mobile phone may display the prompt card 701 in the interface 700 shown in FIG. 7(b). The prompt card 701 includes that a reason for restricting use of satellite communication is "the moving speed is excessively fast". Optionally, the prompt card 701 may further display prompt information including a communication result of sending failed.

For example, as shown in FIG. 7(c), if the mobile phone is restricted from communicating with the satellite by using the first application because the location of the mobile phone is within a range of any communication management and control area, the mobile phone may display the prompt card 702 in the interface shown in FIG. 7(c). The prompt card 702 displays "a communication result of SMS message sending failed, and a reason for sending failed is that use of satellite communication is restricted in the current area".

In a possible implementation of this application, the prompt card 702 or the prompt card 701 may also include a close control 703. When the electronic device detects a specified operation on the close control 703 or the electronic device detects a specified operation input by the user in the prompt card 702 or the prompt card 701, the electronic device cancels displaying of the prompt card 702 or the prompt card 701. For example, the specified operation may be a tap operation, a double-tap operation, or another operation. This is not limited in this embodiment of this application.

Certainly, the electronic device may alternatively automatically cancel displaying of the prompt card 702 or the prompt card 701 after a preset time. In this way, the user can be prevented from manually closing the prompt card 702 or the prompt card 701, thereby further improving user experience.

In a possible implementation of this application, that the electronic device determines, based on the location information of the electronic device and/or the moving speed of the electronic device, whether the electronic device meets the use restriction condition may be implemented in the following manners:

### Case (1): Automatically restrict the electronic device from enabling satellite communication in a specified scenario.

For example, if the electronic device needs to be automatically restricted from enabling satellite communication in the specified scenario (for example, a flight scenario), and the electronic device does not need to be restricted from enabling satellite communication in a non-specified scenario, because a moving speed of the electronic device in the flight scenario is usually fast, and a moving speed of the electronic device in the non-specified scenario is usually less than the moving speed of the electronic device in the flight scenario, whether the electronic device meets the use restriction condition may be determined with reference to the moving speed of the electronic device.

The electronic device determines that the electronic device meets the use restriction condition when the moving speed of the electronic device is greater than or equal to a preset speed threshold; or determines that the electronic device does not meet the use restriction condition when the moving speed of the electronic device is less than the preset speed threshold.

The preset speed threshold is not specifically limited in this embodiment of this application. Because moving speeds of an airplane in different phases (phases of taxiing, take-off, climbing, cruise, descending, and landing) are usually different. For example, a speed of the airplane in the taxiing phase is usually 10 knots/hour (that is, 18.52 kilometers/hour); a flight speed of the airplane in the take-off phase and the climbing phase is usually 160 to 200 knots/hour (296.32 kilometers/hour to 370.4 kilometers/hour); a flight speed of the airplane in the cruise phase is usually 300 km/h to 2000 km/h; a flight speed of the airplane in the descending phase and the climbing phase is usually 160 to 200 knots/hour (296.32 kilometers/hour to 370.4 kilometers/hour); and a flight speed of the airplane in the landing phase is usually 130 to 160 knots/hour (240.76 kilometers/hour to 296.32 kilometers/hour). Assuming that communication between the electronic device and the satellite needs to be restricted when the airplane is in the take-off and climbing phase, and the preset speed threshold may be set to 300 kilometers/hour. If communication between the electronic device and the satellite needs to be restricted when the airplane is in the cruise phase, the preset speed threshold may be set to a minimum flight speed corresponding to the cruise phase, or may be set to a speed range selected from a speed interval corresponding to the cruise phase. This is not limited in this embodiment of this application.

In an example, the preset speed threshold may be 200 km/h, or the preset speed threshold may be 300 km/h at a minimum and 1200 km/h at a maximum.

It is assumed that the electronic device needs to be restricted from enabling satellite communication in the flight scenario instead of a non-flight scenario (for example, the electronic device is located in a high-speed railway). A maximum speed of the high-speed railway may reach 300 km/h to 350 km/h. Therefore, when the preset speed threshold is set, the preset speed threshold may be set to be greater than or equal to the maximum speed of the high-speed railway. In this way, when the electronic device is in the high-speed railway, the electronic device may be prevented from performing misjudgment due to an excessively fast moving speed, thereby restricting communication between the electronic device and the satellite.

With reference to the foregoing scenario, to avoid a misjudgment caused by determining whether the electronic device meets the use restriction condition separately with reference to the moving speed, the electronic device may further determine, based on the moving speed and the scenario in which the electronic device is located, whether the electronic device meets the use restriction condition. In view of this, the method provided in this embodiment of this application may further include:

The electronic device determines a scenario in which the electronic device is currently located. Correspondingly, the electronic device determines that the electronic device meets the use restriction condition when the moving speed of the electronic device is greater than or equal to the preset speed threshold, and the scenario in which the electronic device is currently located is a preset scenario.

In an example, the preset scenario may be a scenario in which use of satellite communication is restricted. For example, the preset scenario may be the flight scenario.

In a possible implementation of this application, that the electronic device determines the scenario in which the electronic device is located includes: The electronic device obtains an altitude of the electronic device. When the altitude of the electronic device is higher than or equal to a preset altitude, the electronic device determines that the scenario in which the electronic device is located is the preset scenario.

In an example, the electronic device has a barometric pressure sensor, and the electronic device may determine the altitude of the electronic device through the barometric pressure sensor. Certainly, the electronic device may alternatively determine the altitude of the electronic device in another manner. This is not limited in this embodiment of this application.

In a possible implementation of this application, the barometric pressure sensor may be always in a working state. In this way, the electronic device can obtain, in real time, information that is collected by the barometric pressure sensor and that is used to determine the altitude of the electronic device. Alternatively, optionally, when the altitude of the electronic device is higher than or equal to the preset altitude, the electronic device may control the barometric pressure sensor to start, to obtain information that is collected by the barometric pressure sensor and that is used to determine the altitude of the electronic device.

### Case (2): Automatically restrict the electronic device from using satellite communication in the communication management and control area.

Optionally, the electronic device has a first list, and the first list is used to determine information about one or more communication management and control areas in which use of satellite communication is restricted. Correspondingly, that the electronic device determines, based on the location information of the electronic device, whether the electronic device meets the use restriction condition includes:

When the location information of the electronic device indicates that the location of the electronic device is within any one of the communication management and control area, the electronic device determines that the electronic device meets the use restriction condition; or when the location information of the electronic device indicates that the location of the electronic device is outside any one of the communication management and control area, the electronic device determines that the electronic device does not meet the use restriction condition.

An area in this embodiment of this application may be a country or a region, for example, information about a country A, information about a city A, or information about a district A in a city A.

In an example, the first list includes information about one or more public communication areas and information about n communication management and control areas included in the public communication area, the public communication area is an area in which satellite communication can be used, and n is an integer greater than or equal to 0.

The communication management and control area may be a part or all of the public communication area. For example, the public communication area includes M areas in total, and a quantity of communication management and control areas may be less than M. When the quantity of communication management and control areas is equal to M, it indicates that satellite communication is restricted in the entire public communication area.

It may be understood that when one public communication area includes 0 communication management and control areas, it indicates that there is no communication management and control area in the public communication area. When a quantity of communication management and control areas included in one public communication area is greater than or equal to 1, it indicates that there is at least one communication management and control area in the public communication area, and areas other than the at least one communication management and control area in the public communication area all are areas in which communication can be performed via the satellite. For example, the public communication area being a country A is used as an example. If the first list includes information about the country A, and includes information about a city A1, in the country A, that is a communication management and control area in which satellite communication is restricted in the country A, it indicates that the city A1 is restricted from using satellite communication, and a city A2 and a city A3 in the country A other than the city A1 are both areas in which communication can be performed via the satellite. Therefore, when the first function control of the electronic device is triggered, if the electronic device detects that the location of the electronic device is within the city A1, the electronic device is restricted from using satellite communication. When the first function control of the electronic device is triggered, if the electronic device detects that the location of the electronic device is within the city A2, the electronic device may send an SMS message, a voice call request, or a video call request to the satellite.

It may be understood that when the first list includes the information about the one or more public communication areas and the information about the n communication management and control areas included in the public communication area, the first list may be considered as a blocklist and an allowlist. For example, the blocklist and the allowlist include identifiers of one or more countries in which satellite communication can be used and identifiers of one or more cities in which satellite communication cannot be used, for example, a country A and a country B, and a city 001 and a city 002 in the country A. In this case, the electronic device may determine that satellite communication can be used in a place other than the city 001 and the city 002 in the country A, that is, the place other than the city 001 and the city 002 in the country A is not a management and control area, and areas corresponding to the city 001 and the city 002 are management and control areas in which satellite communication cannot be used; and satellite communication can be performed in all areas in the country B.

Alternatively, in another example, the first list includes the information about the one or more communication management and control areas in which satellite communication cannot be used. For example, if a city 001 and a city 002 in a country A are management and control areas in which satellite communication is restricted, the first list may include city identifiers of the city 001 and the city 002.

In a possible embodiment of this application, the first list is preconfigured in the electronic device. For example, the first list is configured before delivery of the electronic device. Alternatively, the first list may be obtained by the electronic device from a server. It should be noted that the electronic device may periodically obtain the first list from the server. In this way, it can be ensured that accuracy of the obtained first list is higher.

In a possible embodiment of this application, after the electronic device obtains the first list from the server, the electronic device may replace the first list preconfigured in the electronic device with the first list obtained from the server.

For example, if the server detects that an area in which communication with the satellite can be performed changes, the server sends, to the electronic device, updated information about the area in which communication with the satellite can be performed, so that the electronic device obtains the first list. Alternatively, the server sends, to the electronic device, updated information about the area in which communication with the satellite can be performed, and then the electronic device updates the original first list of the electronic device based on the updated information about the area in which communication with the satellite can be performed, to obtain an updated first list.

If the electronic device is always in a state of monitoring the location information of the electronic device and/or the moving speed of the electronic device, power consumption of the electronic device may be high. In view of this, to reduce power consumption of the electronic device, in a possible embodiment of this application, when detecting an operation, of opening the first application, that is triggered by the user, the electronic device starts to monitor the location information of the electronic device and/or the moving speed of the terminal.

For example, in the interface shown in FIG. 2A, if the electronic device detects the open operation, on the first application, that is input by the user, the electronic device may determine that the operation, of opening the first application, that is triggered by the user is detected. The electronic device being a mobile phone is used as an example. The operation may be a tap operation performed by the user on a display of the mobile phone, or may be a double-tap operation. This is not limited in this embodiment of this application.

In a possible embodiment of this application, when the first application is in a use-restricted state, the method provided in this embodiment of this application may further include: re-obtaining the location information and/or the moving speed of the electronic device when the electronic device meets a specified condition. Then, if the electronic device determines, based on the re-obtained location information and/or the re-obtained moving speed of the electronic device, that the electronic device does not meet the use restriction condition, the electronic device outputs prompt information to indicate to the user that communication with the satellite currently can be performed by using the first application.

In an example, the specified condition may include: detecting an operation on the first function control, and/or meeting a preset determining period (for example, one hour or 30 minutes).

When the first application is in the use-restricted state (namely, a scenario in which communication with the satellite is restricted), for example, the preset determining period is 30 minutes, the electronic device may re-obtain the location information and/or the moving speed of the electronic device at an interval of 30 minutes. Then, the electronic device determines, based on the re-obtained location information and/or the re-obtained moving speed of the electronic device, whether the electronic device meets the use restriction condition. If the electronic device does not meet the use restriction condition, the electronic device outputs prompt information to indicate to the user that communication with the satellite currently can be performed by using the first application. If the electronic device meets the use restriction condition, the electronic device may output prompt information to indicate to the user that communication with the satellite currently cannot be performed by using the first application, and continues to set the first function control of the first application to be in the use-restricted state. In this solution, the electronic device may automatically determine whether the electronic device meets the use restriction condition.

In a possible embodiment of this application, when the first application is in the use-restricted state, as shown in FIG. 6A and FIG. 6B, the method provided in this embodiment of this application may further include the following steps.

Step 606: The electronic device detects the operation on the first function control again.

Step 607: The electronic device re-obtains the location information and/or the moving speed of the electronic device in response to the operation on the first function control again.

Step 608: The electronic device determines, based on the re-obtained location information and/or the re-obtained moving speed of the electronic device, whether the electronic device meets the use restriction condition.

Step 609: If the electronic device determines, based on the re-obtained location information and/or the re-obtained moving speed of the electronic device, that the electronic device does not meet the use restriction condition, the electronic device sends, via the satellite, communication content triggered by the user in the communication interface, that is, in this case, the electronic device may communicate with the satellite by using the first application.

It should be noted that when the electronic device detects the operation on the first function control again, if the electronic device determines, based on the re-obtained location information and/or the re-obtained moving speed of the electronic device, that the electronic device does not meet the use restriction condition, and the user does not input content in the communication interface (for example, there is no text content in a dialog box shown in FIG. 2F), the electronic device may send, to the satellite, currently obtained geographical location information of the electronic device as content of the SMS message.

For example, the electronic device being a mobile phone is used as an example. In the messaging session interface 700 shown in FIG. 7(a), if the mobile phone detects an operation (corresponding to a moment T1) of the user on the sending control 208, the mobile phone determines, based on location information, of the mobile phone, that is detected through monitoring at the moment T1, whether the mobile phone is located in the communication management and control area. If the mobile phone is located in the communication management and control area, the mobile phone determines that the mobile phone is restricted from using a MeeTime application to communicate with the satellite, that is, restricted from using the MeeTime application to send an SMS message to the satellite. Therefore, the mobile phone may display a prompt interface shown in FIG. 7(b) or FIG. 7(c). After a period of time, for example, at a moment T2, if the mobile phone detects the operation on the sending control 208 again, the mobile phone determines, again based on the location information, of the mobile phone, that is detected through monitoring at the moment T2, whether the mobile phone is located in the communication management and control area. At the moment T2, if the mobile phone is still located in the communication management and control area, the mobile phone determines to continue to restrict the mobile phone from using the MeeTime application to communicate with the satellite. Optionally, the mobile phone may display the prompt interface shown in FIG. 7(b) or FIG. 7(c) again. At the moment T2, if the location information of the mobile phone indicates that the mobile phone is located outside the communication management and control area, the mobile phone determines that the mobile phone currently can use the MeeTime application to communicate with the satellite (for example, send an SMS message), and the mobile phone sends the SMS message to the satellite by using the MeeTime application. For a specific process, refer to descriptions in FIG. 2G to FIG. 2L. Details are not described herein again.

In another possible embodiment of this application, when the electronic device is restricted from communicating with the satellite by using the first application, the electronic device may periodically perform the process of determining, based on the moving speed and/or the location information of the electronic device, whether the electronic device meets the use restriction condition. When the moving speed and/or the location information of the electronic device indicates that the electronic device does not meet the use restriction condition, the electronic device cancels the restriction on communication with the satellite by using the first application.

It may be understood that after the electronic device cancels the restriction on communication with the satellite by using the first application, if the user triggers the first function control, the electronic device may send, to the satellite by using the first application, call content input by the user in the call interface.

In a possible embodiment of this application, to help the user learn that the use-restricted state of the first application of the user is canceled, in this embodiment of this application, that the electronic device cancels the restriction on the first application further includes: the electronic device outputs second prompt information, where the second prompt information indicates that the restriction on the first application is canceled. The electronic device may further output a reason why the restriction on the first application is canceled. For example, the moving speed of the electronic device meets a requirement (for example, is less than the preset speed threshold), or the electronic device is currently located in an area in which the satellite can be used for communication. Therefore, a satellite communication function may be used. In an example, the electronic device outputs a second prompt card including the second prompt information.

In a possible implementation of this application, that the electronic device restricts the electronic device from communicating with the satellite by using the first application may further include: The electronic device sets the first function control to be in the use-restricted state (for example, grayed out). For example, the user may set the first function control in a specified time period to be in the use-restricted state. It may be understood that when the first function control is in the use-restricted state, even if the user triggers the operation on the first function control, the electronic device does not send, to the satellite, communication content triggered by the user in the first application. It may be understood that when the first function control is in the use-restricted state, assuming that the user triggers the operation of the first function control, the electronic device may re-determine whether the electronic device currently meets the use restriction condition. If the electronic device meets the use restriction condition, the electronic device continues to set the first function control to be in the use-restricted state. If the electronic device does not meet the use restriction condition, the electronic device sets the first function control to be in an available state. It may be understood that when the first function control is in the available state, if the user triggers the operation on the first function control, the electronic device may communicate with the satellite by using the first application in response to the operation on the first function control. When the first function control is in the use-restricted state, if the user triggers the operation on the first function control, the electronic device does not communicate with the satellite by using the first application.

Because a satellite communication resource is usually precious, if the satellite communication resource is always occupied, the electronic device that is in urgent need of resources is unavailable. Therefore, it is necessary to restrict use of satellite communication by the electronic device in this scenario.

To prevent the user from frequently using the satellite for communication, in the method provided in this embodiment of this application, when a preset condition is met, the electronic device obtains a current sending time interval. The current sending time interval is a difference between a current time and a moment at which the electronic device previously uses satellite communication; and when the current sending time interval is less than or equal to a preset sending time interval, the electronic device sets an operation state of the first function control in the communication interface to the use-restricted state; or when the current sending time interval is greater than the preset sending time interval, in response to the operation on the first function control, the electronic device communicates with the satellite by using the first application.

The current sending time interval is the difference between the current time and the moment at which the electronic device previously uses satellite communication; and when the current sending time interval is less than or equal to the preset sending time interval, that the electronic device sets the operation state of the first function control in the communication interface to the use-restricted state further includes: The electronic device does not send the SMS message/the voice call request/the video call request to the satellite by using the first application.

For example, the preset condition may be detecting the operation, of opening the first application, that is triggered by the user or an operation of tapping the first function control.

When the current sending time interval is greater than the preset sending time interval, the electronic device sets the operation state of the first function control in the communication interface to the available state.

In an example, the preset sending time interval may be set based on an actual requirement. For example, the preset sending time interval may be 60 seconds or 120 seconds.

In an example, the current time may be a moment at which the electronic device detects that the first function control is triggered.

In this embodiment of this application, the moment at which the electronic device previously communicates with the satellite by using the first application is a moment at which the electronic device sends the SMS message, the voice call request, or the video call request to the satellite by using the first application last time; or a moment at which the electronic device makes a voice call or a video call via the satellite by using the first application last time before this time.

In a possible embodiment of this application, that the electronic device sets the operation state of the first function control in the communication interface to the use-restricted state further includes: The electronic device displays use-restricted countdown information in the communication interface, where the use-restricted countdown information is a time at which the operation state of the first function control changes from the use-restricted state to the available state.

Correspondingly, the method provided in this embodiment of this application further includes: setting the operation state of the first function control in the communication interface to the available state after the time included in the use-restricted countdown information. For example, if the use-restricted countdown information is 10 seconds, the mobile phone sets, after 10 seconds, the state of the first function control displayed in the first communication interface to the available state.

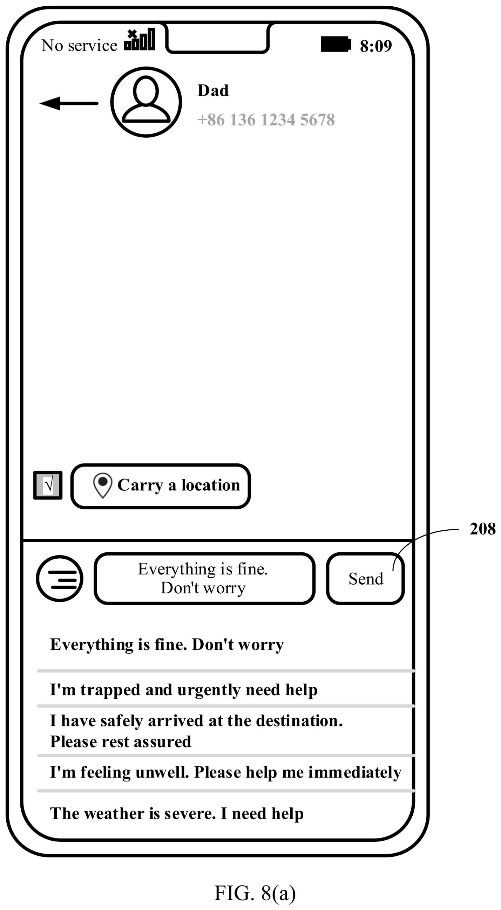

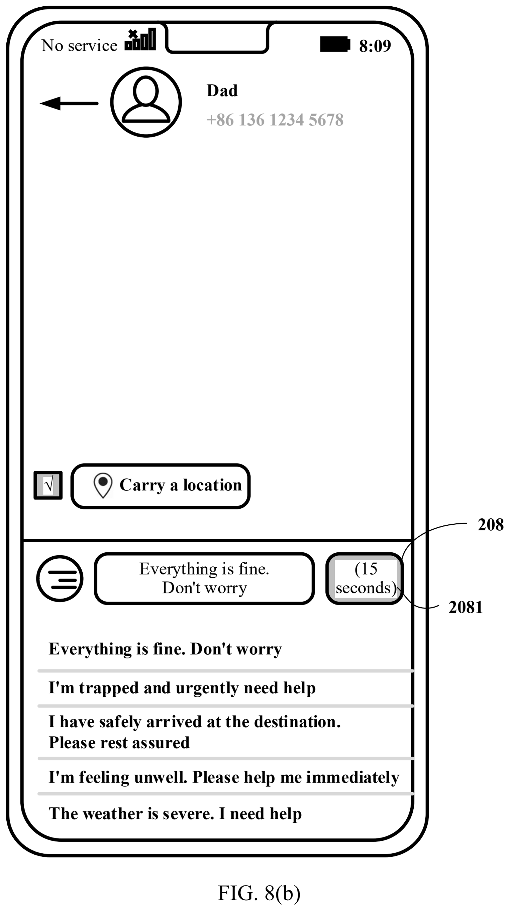

For example, as shown in FIG. 8(a) and FIG. 8(b), an example in which the mobile phone sends the SMS message to the satellite by using the MeeTime application is used. If the mobile phone detects an open operation, on the MeeTime application shown in FIG. 8(a), that is input by the user, or the mobile phone detects a tap operation of the user on the sending control 208, the mobile phone determines the current sending time interval. The preset sending time interval being 60 seconds is used as an example. If a moment T at which the electronic device previously sends the SMS message via the satellite is 12:10:05, and the current time is 12:10:45, the current sending time interval=40 seconds. Because the current sending time interval is less than 60 seconds, the electronic device sets the operation state of the first function control in the communication interface to the use-restricted state. Assuming that the user inputs the SMS message in the messaging session interface in this case, the electronic device does not send the SMS message to the satellite. For example, as shown in FIG. 8(b), the mobile phone sets the sending control 208 in the messaging session interface to be grayed out (namely, the use-restricted state). Optionally, the countdown information may also be displayed in the messaging session interface as time prompt information, for example, 15 seconds. In this way, the user may determine, based on the countdown information, that the sending control 208 can be operated after 15 seconds, and the countdown information may also display a remaining time to the user. After 15 seconds, the operation state of the sending control 208 in the messaging session interface of the mobile phone changes to the available state. When the sending control 208 is in the available state, the mobile phone may perform the operation of the user on the sending control 208. For example, if the user taps the sending control 208, the mobile phone sends the SMS message to the satellite. When the sending control 208 is in the use-restricted state, the mobile phone does not perform a function corresponding to the sending control 208, that is, the mobile phone does not send the SMS message to the satellite by using the first application. For example, if the user taps the sending control 208, the mobile phone does not perform an action of sending the SMS message to a satellite.

For example, if the moment T at which the electronic device previously sends the SMS message via the satellite is 12:09:35, and the current time is 12:10:45, the current sending time interval=70 seconds. Because the current sending time interval is greater than 60 seconds, the electronic device performs the function corresponding to the sending control 208, that is, the sending control 208 is triggered, and the mobile phone sends the SMS message to the satellite by using the first application.

It may be understood that in this embodiment of this application, in the process in which the electronic device is restricted from communicating with the satellite by using the first application, the electronic device may still communicate with a base station in a cellular network by using the first application. For example, the location of the electronic device is within the communication management and control area. However, if the electronic device meets a condition for communicating with the base station in the cellular network, the electronic device may send the SMS message or initiate the voice or video call request via the base station by using the first application.

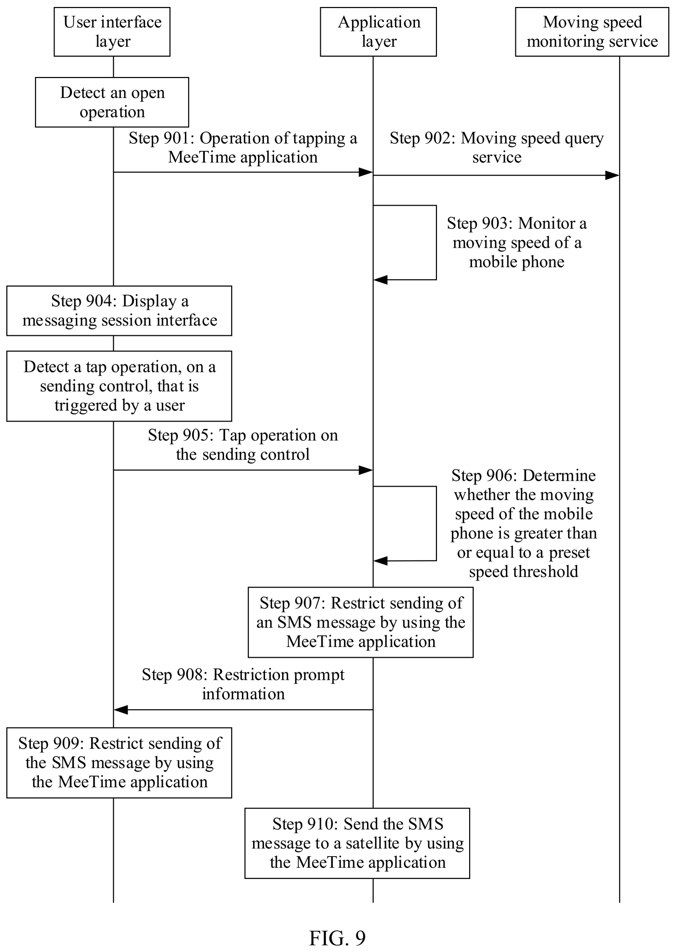

The following describes, separately with reference to FIG. 9 to FIG. 11, schematic flowcharts of restricting use of satellite communication in different scenarios in embodiments of this application by using an example in which the first application is the MeeTime application and the mobile phone sends the SMS message to the satellite by using the MeeTime application.

As shown in FIG. 9, an example in which an electronic device is automatically restricted from enabling a satellite communication function in a specified scenario is used. As shown in FIG. 9, the method includes the following steps.

Step 901: A user interface layer displays an interface including a MeeTime application, detects a tap operation, of opening the MeeTime application, that is triggered by a user in the interface, and sends an open operation on the MeeTime application to an application layer.

Step 902: If the application layer detects the operation, of opening the MeeTime application, that is input by the user in the user interface layer, the application layer sends a moving speed query service to a moving speed monitoring service.

For example, the application layer delivers the moving speed query service to the moving speed monitoring service. The moving speed monitoring service receives the moving speed query service, and sends the moving speed query service to a sensor driver, and then the sensor driver starts to monitor a moving speed of a mobile phone based on the moving speed monitoring service. The sensor driver reports, to the moving speed monitoring service, the moving speed, of the mobile phone, detected through monitoring, so that the moving speed monitoring service reports, to the MeeTime application at the application layer, the moving speed, of the mobile phone, detected through monitoring, and the MeeTime application can obtain the moving speed of the mobile phone.

Step 903: The application layer starts to monitor the moving speed of the mobile phone in response to the open operation of the user in step 901.

Step 904: After the MeeTime application is opened, in response to an input operation of the user, the user interface layer displays a messaging session interface (corresponding to a first communication interface). As shown in FIG. 2F, the messaging session interface includes the sending control 208.

It may be understood that in the interface shown in FIG. 2F, the user may input, in a dialog box through editing, content of an SMS message that needs to be sent.

Step 905: The user interface layer sends an operation for the sending control to the application layer.

Step 906: The application layer determines, in response to an operation of the user on the sending control in the messaging session interface, whether the moving speed of the mobile phone is greater than or equal to a preset speed threshold. When the moving speed of the mobile phone is greater than or equal to the preset speed threshold, the following step 907 is performed. When the moving speed of the mobile phone is less than the preset speed threshold, the following step 910 is performed.

Step 907: When the moving speed of the mobile phone is greater than or equal to the preset speed threshold, the application layer restricts the mobile phone from sending an SMS message to a satellite by using the MeeTime application.

Step 908: When the moving speed of the mobile phone is greater than or equal to the preset speed threshold, the application layer further sends restriction prompt information, for example, a reason for restricting communication between the MeeTime application and the satellite, to the user interface layer.

Step 909: The user interface layer outputs, in the messaging session interface, prompt information indicating that use is restricted due to an excessively fast moving speed.

Step 910: When the moving speed of the mobile phone is less than the preset speed threshold, the mobile phone sends the SMS message to the satellite by using the MeeTime application.

It may be understood that the SMS message includes not only current location information of the mobile phone, but also other text content input by the user in the messaging session interface.

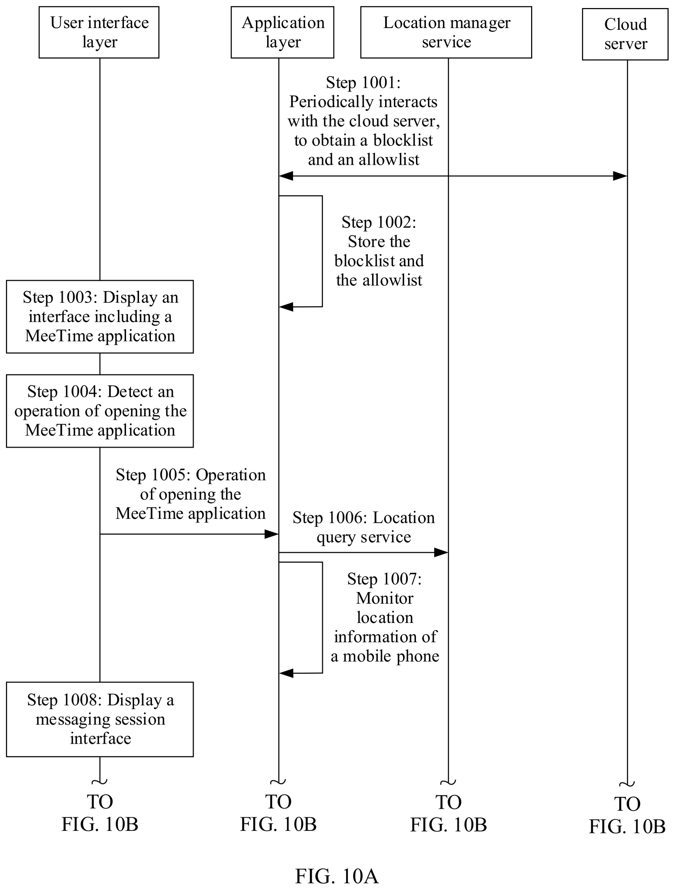

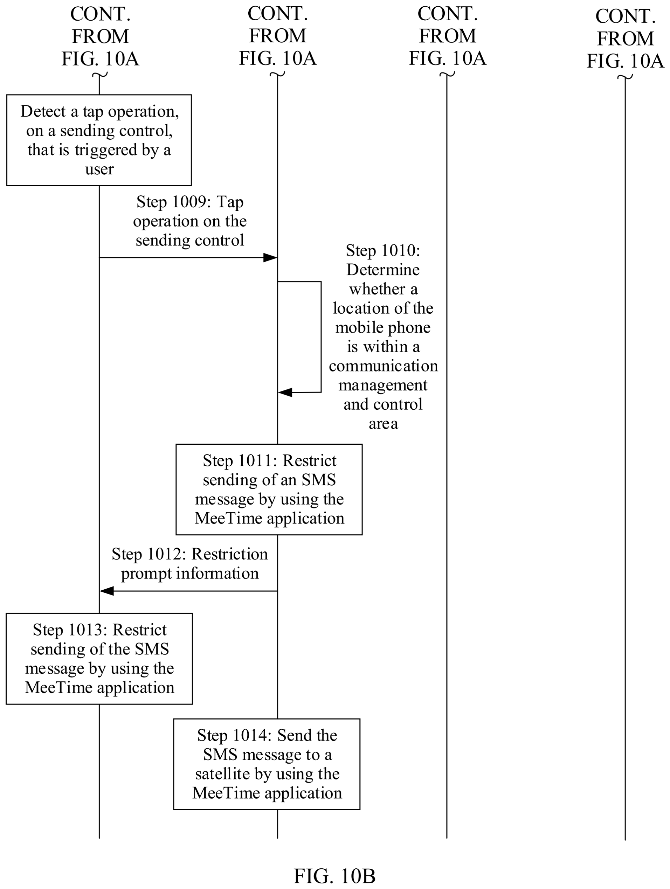

As shown in FIG. 10A and FIG. 10B, an example in which an electronic device in a management and control area is automatically restricted from enabling a satellite communication function is used. As shown in FIG. 10A and FIG. 10B, the method includes the following steps.

Step 1001: An application layer in a mobile phone periodically interacts with a cloud server, to obtain a blocklist and an allowlist.

For example, a preset period is configured in the mobile phone, and the mobile phone may periodically obtain the blocklist and allowlist from the server based on the preset period, for example, once a week or once a month. Certainly, to enable the mobile phone to learn a latest blocklist and a latest allow list in the cloud server in time, after the blocklist and the allowlist in the cloud server are updated, the cloud server may indicate the mobile phone to update the blocklist and the allowlist in the mobile phone in time.

Step 1002: The application layer stores the obtained blocklist and the obtained allowlist.

Step 1003: The mobile phone displays, at a user interface layer, an interface including a MeeTime application.

Step 1004: The user interface layer detects an operation, of opening the MeeTime application, that is input by a user.

Step 1005: The user interface layer sends, to the application layer, the operation, of opening the MeeTime application, that is input by the user.

Step 1006: The application layer delivers a location request service to a location manager service.

Step 1007: Start to monitor location information of the mobile phone.

Specifically, the location manager service receives the location query service, and sends the location query service to a positioning driver (for example, a sensor driver), and then the sensor driver invokes, based on a location monitoring service, a sensor to start to monitor the location information of the mobile phone. The sensor driver reports, to the location manager service, the location information, of the mobile phone, detected through monitoring, so that the location manager service reports the location information, of the mobile phone, detected through monitoring to the MeeTime application at the application layer, and the MeeTime application can obtain the location information of the mobile phone.

Step 1008: The user interface layer displays a messaging session interface in response to an operation of the user.

Step 1009. If detecting an operation of the user on a sending control in the messaging session interface, the user interface layer sends a tap operation of tapping the sending control by the user to the application layer.

Step 1010: The application layer determines, in response to the operation of the user on the sending control, whether a location of the mobile phone is within a communication management and control area recorded in the blocklist and the allowlist.

Step 1011: When the location of the mobile phone is within the communication management and control area recorded in the blocklist and the allowlist, the application layer restricts the mobile phone from sending an SMS message to a satellite by using the MeeTime application. For example, the application layer does not send the SMS message to a communication module.

Step 1012: The application layer sends restriction prompt information to the user interface layer, for example, a reason for restricting the MeeTime application from communicating with the satellite.

Step 1013: The user interface layer outputs a prompt card in the messaging session interface, where the prompt card includes prompt information indicating that a location of the electronic device is within the communication management and control area, and therefore the electronic device is restricted from communicating with the satellite by using the first application.

Step 1014: When the location of the mobile phone is outside the communication management and control area recorded in the blocklist and the allowlist, the application layer sends the SMS message to the satellite by using the MeeTime application. For example, the application layer sends the SMS message to the communication module, so that the communication module sends the SMS message.

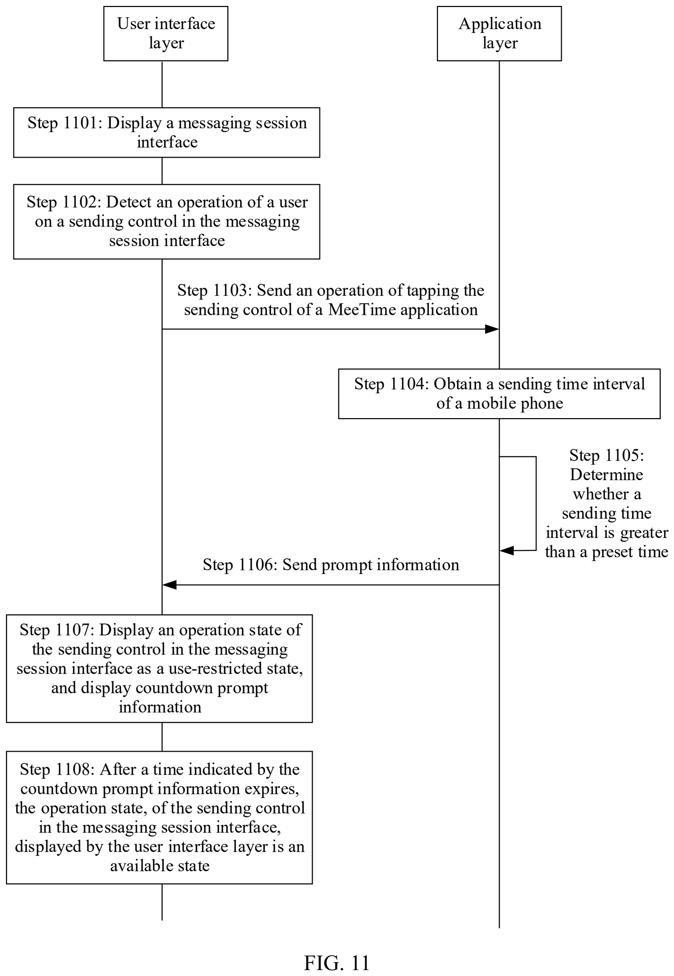

As shown in FIG. 11, an example in which communication between a mobile phone and a satellite is restricted based on a use interval is used. As shown in FIG. 11, the method includes the following steps.

Step 1101: A user interface layer displays a messaging session interface of a MeeTime application.

Step 1102: The user interface layer detects an operation of a user on a sending control in the messaging session interface.

Step 1103: The user interface layer sends, to an application layer, an operation, of tapping the sending control of the MeeTime application, that is input by the user.

Step 1104: The application layer obtains the operation of tapping the sending control by the user, and the application layer obtains a sending time interval of the mobile phone.

Step 1105: The application layer determines whether a current sending time interval is greater than a preset sending time interval threshold.

Step 1106: When the current sending time interval is less than or equal to the preset sending time interval threshold, the application layer sends prompt information to the user interface layer, where the prompt information is used to trigger the user interface layer to display an operation state of the sending control in the messaging session interface as a use-restricted state, and display countdown prompt information.

Step 1107: The user interface layer displays, in response to the prompt information, the operation state of the sending control in the messaging session interface as the use-restricted state, and displays the countdown prompt information.

Step 1108: After a time indicated by the countdown prompt information expires, the operation state, of the sending control in the messaging session interface, displayed by the user interface layer is an available state.

It may be understood that, to implement functions of any one of the foregoing embodiments, an electronic device includes a corresponding hardware structure and/or software module for performing the functions. A person skilled in the art should easily be aware that, in combination with units and algorithm steps of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the electronic device may be divided into functional modules. For example, each functional module corresponding to each function may be obtained through division, or two or more functions may be integrated into one processing module. The integrated module may be implemented in a form of hardware, or may be implemented in a form of a software functional module. It should be noted that, in embodiments of this application, division into modules is an example, and is merely a logical function division. During actual implementation, another division manner may be used.

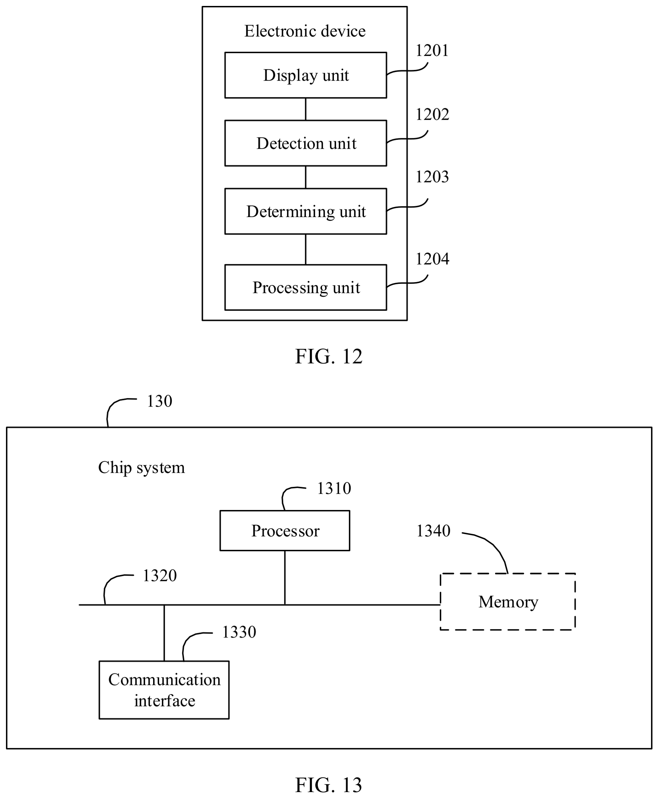

For example, when each functional module is obtained through division in an integrated manner, FIG. 12 is a block diagram of a structure of an electronic device according to an embodiment of this application. As shown in FIG. 12, the electronic device may include a display unit 1201, a detection unit 1202, a determining unit 1203, and a processing unit 1204.

The display unit 1201 is configured to display a communication interface of a first application, where the communication interface of the first application includes at least a first function control. The detection unit 1202 is configured to detect an operation on the first function control. The determining unit 1203 is configured to: in response to the operation on the first function control, determine, based on location information of the electronic device and/or a moving speed of the electronic device that are/is obtained by a first obtaining unit, whether the electronic device meets a use restriction condition. The processing unit 1204 is configured to: when the determining unit determines that the electronic device meets the use restriction condition, restrict the electronic device from communicating with the satellite by using the first application.

Optionally, the processing unit 1204 is further configured to control the display unit 1201 to output first prompt information, where the first prompt information indicates a reason why the electronic device is restricted from communicating with a satellite by using the first application.

In a possible implementation of this application, the determining unit 1203 is configured to determine that the electronic device meets the use restriction condition when the moving speed of the electronic device is greater than or equal to a preset speed threshold; or the determining unit 1203 is configured to determine that the electronic device does not meet the use restriction condition when the moving speed of the electronic device is less than the preset speed threshold.

In a possible implementation of this application, the processing unit 1204 is further configured to determine a scenario in which the electronic device is located; and the determining unit is further configured to determine that the electronic device meets the use restriction condition when the moving speed of the electronic device is greater than or equal to the preset speed threshold, and the scenario in which the electronic device is located is a preset scenario.

In a possible implementation of this application, the processing unit 1204 is further configured to: obtain an altitude of the electronic device through the first obtaining unit; and when the altitude of the electronic device is higher than or equal to a preset altitude, determine that the scenario in which the electronic device is located is the preset scenario.

In a possible implementation of this application, the electronic device has a first list, and the first list is used to determine information about one or more communication management and control areas in which use of satellite communication is restricted; and the determining unit 1203 is specifically configured to: when the location information of the electronic device indicates that a location of the electronic device is within any one of the communication management and control areas, determine that the electronic device meets the use restriction condition; or when the location information of the electronic device indicates that the location of the electronic device is outside the one or more communication management and control areas, the determining unit 1203 is configured to determine that the electronic device does not meet the use restriction condition.

In a possible implementation of this application, the first list includes information about one or more public communication areas in which satellite communication can be used and information about n communication management and control areas included in the public communication area, and n is an integer greater than or equal to 0; or the first list includes the information about the one or more communication management and control areas in which satellite communication cannot be used.

In a possible implementation of this application, the first list is a list preconfigured in the electronic device, or the first list is a list obtained by the electronic device from a server.

In a possible implementation of this application, the processing unit 1204 is further configured to: in response to the operation on the first function control again, control the first obtaining unit to re-obtain the location information and/or the moving speed of the electronic device. The processing unit 1204 is further configured to determine, based on the re-obtained location information and/or the re-obtained moving speed of the electronic device, whether the electronic device meets the use restriction condition. A communication unit is configured to: when the electronic device does not meet the use restriction condition, communicate with the satellite by using the first application, to send communication content triggered by a user in the call interface. The processing unit 1204 is further configured to: when the electronic device meets the use restriction condition again, continue to restrict the electronic device from communicating with the satellite by using the first application.

In a possible implementation of this application, the communication interface is a messaging session interface, and the first function control is a sending control; or the communication interface is a voice call interface, and the first function control is a sending control, a voice call control, or a video call control.

In a possible implementation of this application, a monitoring unit is configured to monitor the location information of the electronic device and/or the moving speed of the electronic device.

In a possible implementation of this application, if the detection module detects an operation that the user indicates to open the first application, the monitoring unit is configured to start to monitor the location information of the electronic device and/or the moving speed of the electronic device.

In a possible implementation of this application, a second obtaining unit is further configured to: in response to the operation on the first function control, obtain a sending time interval, where the sending time interval is determined based on a sending interval threshold and a first difference, and the first difference is determined based on a moment at which the electronic device currently obtains the sending time interval and a moment at which the electronic device previously communicates with the satellite by using the first application. When the sending time interval is greater than a preset time, the processing unit 1204 is configured to set an operation state of the first function control in the communication interface to a use-restricted state; or when the sending time interval is greater than or equal to the preset time, in response to the operation on the first function control, the processing unit 1204 is configured to invoke the communication unit to communicate with the satellite by using the first application.

In a possible implementation of this application, the display unit 1201 is further configured to display use-restricted countdown information in the communication interface, where the use-restricted countdown information is a time at which the operation state of the first function control changes from the use-restricted state to an available state. The processing unit 1204 is further configured to set the operation state of the first function control in the communication interface to the available state. In other words, the operation state of the first function control in the displayed communication interface of the display unit 1201 also changes to the available state.

Optionally, the electronic device may further include the communication unit. The communication unit is configured to support communication between the electronic device and another electronic device, and/or another process related to embodiments of this application. For example, in this embodiment of this application, the communication unit may send, to the satellite, content triggered by the user in the communication interface of the first application. The electronic device may further include a storage unit. The storage unit is configured to store computer program instructions and related data that are related to embodiments of this application.

In an example, the communication unit may include a radio frequency circuit. Specifically, the electronic device may receive and send radio signals through the radio frequency circuit. The radio frequency circuit usually includes but is not limited to an antenna, at least one amplifier, a transceiver, a coupler, a low noise amplifier, a duplexer, and the like. In addition, the radio frequency circuit may further communicate with another device through wireless communication. The wireless communication may use any communication standard or protocol, including but not limited to a global system for mobile communication, a general packet radio service, code division multiple access, wideband code division multiple access, long term evolution, an email, a messaging service, and the like.

It should be understood that each module in the electronic device may be implemented in a form of software and/or hardware. This is not specifically limited herein. In other words, an input device is presented in a form of a functional module. The "module" herein may be an application-specific integrated circuit ASIC, a circuit, a processor that executes one or more software or firmware programs and a memory, an integrated logical circuit, and/or another component that can provide the foregoing functions.

FIG. 13 is a diagram of a structure of a chip system 130 according to an embodiment of this application. The chip system 130 includes one or more than two (including two) processors 1310 and a communication interface 1330.

Optionally, the chip system 130 further includes a memory 1340. The memory 1340 may include a read-only memory and a random access memory, and provide operation instructions and data for the processor 1310. A part of the memory 1340 may further include a non-volatile random access memory (non-volatile random access memory, NVRAM).

In some implementations, the memory 1340 stores the following elements: an executable module or a data structure, a subset thereof, or an extended set thereof.

In this embodiment of this application, a corresponding operation is performed by invoking the operation instructions (where the operation instructions may be stored in an operating system) stored in the memory 1340.

The processor 1310 controls a processing operation of an electronic device, and the processor 1310 may also be referred to as a central processing unit (central processing unit, CPU).

The memory 1340 may include a read-only memory and a random access memory, and provide instructions and data for the processor 1310. A part of the memory 1340 may further include an NVRAM. For example, during application, the memory 1340, the communication interface 1330, and the memory 1340 are coupled together through a bus system 1320. In addition to a data bus, the bus system 1320 may further include a power bus, a control bus, a status signal bus, and the like. However, for clear description, various types of buses in FIG. 13 are marked as the bus system 1320.

The method disclosed in embodiments of this application may be applied to the processor 1310, or implemented by the processor 1310. The processor 1310 may be an integrated circuit chip and has a signal processing capability. In an implementation process, each step in the foregoing method may be completed through an integrated logical circuit of hardware in the processor 1310 or instructions in a form of software. The processor 1310 may be a general-purpose processor, a digital signal processor (digital signal processor, DSP), an ASIC, a field-programmable gate array (field-programmable gate array, FPGA) or another programmable logic device, a discrete gate or a transistor logic device, or a discrete hardware component. The processor may implement or perform the methods, steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory 1340. The processor 1310 reads information in the memory 1340, and completes the steps in the foregoing method in combination with hardware of the processor 1310.

In a possible implementation, for example, the chip system 130 is applied to the electronic device, and the communication interface 1330 is configured to perform receiving and sending steps of the electronic device in the embodiments shown in FIG. 6A and FIG. 6B to FIG. 11. The processor 1310 is configured to perform processing steps of the electronic device in the embodiments shown in FIG. 6A and FIG. 6B to FIG. 11.

The communication module may be a communication interface of the apparatus, and is configured to receive a signal from another apparatus. For example, when the apparatus is implemented in a manner of a chip, the communication module is a communication interface that is of the chip and that is configured to receive a signal from or send a signal to another chip or apparatus.

An embodiment of this application further provides a computer-readable storage medium, configured to store computer program code. The computer program includes instructions used to perform the method for restricting use of satellite communication provided in embodiments of this application. The readable medium may be a read-only memory (read-only memory, ROM) or a random access memory (random access memory, RAM). This is not limited in embodiments of this application.

This application further provides a computer program product. The computer program product includes instructions. When the instructions are executed, the electronic device is enabled to perform corresponding operations in the foregoing methods.

An embodiment of this application further provides a chip system, applied to an electronic device. The chip system includes: a processing unit and a communication unit. The processing unit may be, for example, a processor, and the communication unit may be, for example, an input/output interface, a pin, or a circuit. The processing unit may execute computer instructions, so that the electronic device performs the foregoing method for restricting use of satellite communication provided in embodiments of this application.

Optionally, the computer instructions are stored in a storage unit.

Optionally, the storage unit is a storage unit in the chip, for example, a register or a cache. Alternatively, the storage unit may be a storage unit in the terminal and located outside the chip, for example, a read-only memory (read-only memory, ROM) or another type of static storage device that can store static information and instructions, or a random access memory (random access memory, RAM). Any processor mentioned above may be a CPU, a microprocessor, an ASIC, or one or more integrated circuits configured to control program execution of the shared input device control method. The processing unit and the storage unit may be decoupled, are disposed on different physical devices respectively, and are connected in a wired or wireless manner to implement respective functions of the processing unit and the storage unit, to support the system chip in implementing various functions in the foregoing embodiments. Alternatively, the processing unit and the memory may be coupled to a same device.

The electronic device, the computer storage medium, the computer program product, or the chip system provided in embodiments is configured to perform the corresponding method provided above. Therefore, for beneficial effect that can be achieved, refer to the beneficial effect of the corresponding method provided above. Details are not described herein again.

Based on the foregoing descriptions of the implementations, a person skilled in the art may understand that, for ease and brevity of description, division into the foregoing functional modules is merely used as an example for description. During actual application, the foregoing functions can be allocated to different functional modules and implemented based on a requirement, that is, an inner structure of an apparatus is divided into different functional modules, to implement all or some of the functions described above.

It should be understood that the apparatus and method disclosed in the several embodiments provided in this application may be implemented in other manners. The apparatus embodiment described above is merely an example. For example, division into the modules or units is merely logical function division and may be other division during actual implementation. For example, a plurality of units or components may be combined or integrated into another apparatus. In addition, some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may be one or more physical units, that is, may be located in one place, or may be distributed in different places. Some or all of the units may be selected based on actual requirements to achieve the objectives of the solutions.

In addition, functional units in embodiments of this application may be integrated into one processing unit, or may exist alone physically; or some units are integrated into one unit, and some units exist alone physically. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, all or some of the technical solutions of embodiments of this application may be embodied in a form of a software product. The software product is stored in a storage medium. The software product includes several instructions for instructing a device (which may be a single-chip microcomputer, a chip or the like) or a processor (processor) to perform all or some of the steps of the method described in embodiments of this application. The foregoing storage medium includes any medium that can store program code, such as a USB flash drive, a removable hard disk, a ROM, a RAM, a magnetic disk, or an optical disc.

It should be noted that all or some (for example, some or all of any features) of the foregoing embodiments provided in this application may be randomly used, mutually combined, or used in combination.

The foregoing content is merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for restricting use of satellite communication, applied to an electronic device, wherein the electronic device has a first application that supports communication between the electronic device and a satellite, and the method comprises:
displaying a communication interface of the first application, wherein the communication interface comprises a first function control, and the first function control is used to trigger the electronic device to communicate with the satellite by using the first application;
detecting an operation on the first function control;
in response to the operation on the first function control, determining, based on location information of the electronic device and/or a moving speed of the electronic device, whether the electronic device meets a use restriction condition; and
when the electronic device meets the use restriction condition, restricting the electronic device from communicating with the satellite by using the first application.

2. The method according to claim 1, wherein restricting the electronic device from communicating with the satellite by using the first application further comprises:
outputting first prompt information, wherein the first prompt information indicates a reason why the electronic device is restricted from communicating with the satellite by using the first application.

3. The method according to claim 1 or 2, wherein determining, based on the moving speed of the electronic device, whether the electronic device meets the use restriction condition comprises:
determining that the electronic device meets the use restriction condition when the moving speed of the electronic device is greater than or equal to a preset speed threshold; or
determining that the electronic device does not meet the use restriction condition when the moving speed of the electronic device is less than the preset speed threshold.

4. The method according to claim 3, wherein the method further comprises:
determining a scenario in which the electronic device is located; and
determining that the electronic device meets the use restriction condition when the moving speed of the electronic device is greater than or equal to the preset speed threshold comprises:
determining that the electronic device meets the use restriction condition when the moving speed of the electronic device is greater than or equal to the preset speed threshold, and the scenario in which the electronic device is located is a preset scenario.

5. The method according to claim 4, wherein determining the scenario in which the electronic device is located comprises:
obtaining an altitude of the electronic device; and
when the altitude of the electronic device is higher than or equal to a preset altitude, determining that the scenario in which the electronic device is located is the preset scenario.

6. The method according to any one of claims 1 to 5, wherein the electronic device has a first list, the first list is used to determine information about one or more communication management and control areas in which use of satellite communication is restricted, and determining, based on the location information of the electronic device, whether the electronic device meets the use restriction condition comprises:
when the location information of the electronic device indicates that a location of the electronic device is within any one of the communication management and control areas, determining that the electronic device meets the use restriction condition; or
when the location information of the electronic device indicates that the location of the electronic device is outside the one or more communication management and control areas, determining that the electronic device does not meet the use restriction condition.

7. The method according to claim 6, wherein the first list comprises information about one or more public communication areas in which satellite communication can be used and information about n communication management and control areas comprised in the public communication area, and n is an integer greater than or equal to 0; or
the first list comprises the information about the one or more communication management and control areas in which satellite communication cannot be used.

8. The method according to claim 6 or 7, wherein the first list is a list preconfigured in the electronic device, or the first list is a list obtained by the electronic device from a server.

9. The method according to any one of claims 1 to 8, wherein when the electronic device is restricted from communicating with the satellite by using the first application, the method further comprises:
in response to the operation on the first function control again, re-obtaining the location information and/or the moving speed of the electronic device;
determining, based on the re-obtained location information and/or the re-obtained moving speed of the electronic device, whether the electronic device meets the use restriction condition;
when the electronic device does not meet the use restriction condition, communicating with the satellite by using the first application, to send communication content triggered by a user in the call interface; and
when the electronic device meets the use restriction condition again, continuing to restrict the electronic device from communicating with the satellite by using the first application.

10. The method according to any one of claims 1 to 9, wherein the communication interface is a messaging session interface, and the first function control is a sending control; or the communication interface is a voice call interface, and the first function control is a voice call control or a video call control.

11. The method according to any one of claims 1 to 10, wherein before displaying the call interface of the first application, the method further comprises:
monitoring the location information of the electronic device and/or the moving speed of the electronic device.

12. The method according to claim 10, wherein monitoring the location information of the electronic device and/or the moving speed of the electronic device comprises:
when detecting an operation that the user indicates to open the first application, starting to monitor the location information of the electronic device and/or the moving speed of the electronic device.

13. The method according to any one of claims 1 to 12, wherein after detecting the operation on the first function control, the method further comprises:
in response to the operation on the first function control, determining a current sending time interval, wherein the current sending time interval is a difference between a current time and a moment at which the electronic device previously uses satellite communication; and
when the current sending time interval is less than or equal to a preset sending time interval, setting an operation state of the first function control in the communication interface to a use-restricted state; or
when the current sending time interval is greater than the preset sending time interval, in response to the operation on the first function control, communicating, by the electronic device, with the satellite by using the first application.

14. The method according to claim 13, wherein setting the operation state of the first function control in the communication interface to the use-restricted state further comprises:
displaying use-restricted countdown information in the communication interface, wherein the use-restricted countdown information is a time at which the operation state of the first function control changes from the use-restricted state to an available state; and
after the time comprised in the use-restricted countdown information, the method further comprises:
setting the operation state of the first function control in the communication interface to the available state.

15. An electronic device, comprising a processor, a memory, a display, and a computer program, wherein the computer program is stored in the memory; and when the computer program is executed by the processor, the electronic device is enabled to perform the method according to any one of claims 1 to 14.

16. A computer-readable storage medium, wherein the computer-readable storage medium stores a computer program; and when the computer program is run on an electronic device, the electronic device is enabled to perform the method according to any one of claims 1 to 14.

17. A chip system, wherein the chip system comprises a processor, and the processor is configured to execute computer program instructions stored in a memory, to implement the method according to any one of claims 1 to 14.
